# EUROPEAN PATENT APPLICATION

(11) **EP 4 730 588 A1**
(43) Date of publication of application: **22.04.2026**
(21) Application number: 24825035.9
(22) Date of filing: 13.05.2024
(51) Int. Cl.: H02J 3/28

(54) **ENERGY STORAGE VALVE OPERATION CONTROL METHOD AND APPARATUS, AND ENERGY STORAGE SYSTEM AND COMPUTER DEVICE**

(30) Priority: 21.06.2023 CN 202310747026; 21.06.2023 CN 202310747028
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: WANG, Sheng, Shanghai 200241 (CN); LIU, Yun, Shanghai 200241 (CN); ZHU, Jianbin, Shanghai 200241 (CN)
(74) Representative: Gong, Jinping
(86) International application number: PCT/CN2024/092897
(87) International publication number: WO 2024/260138

(57) **Abstract**

The present application relates to an energy storage valve operation control method and apparatus, an energy storage system, a computer device, a storage medium, and a computer program product. In a case that an energy storage valve needs to exit operation, a branch current of the energy storage valve is gradually controlled to reduce. During this process, a power variation of the energy storage valve is acquired in real-time and the acquired power variation is sent to a sending-end voltage source converter valve, enabling the sending-end voltage source converter valve to adjust its output power based on the power variation of the energy storage valve at any time, thereby maintaining stable output power of the sending-end voltage source converter valve. Ultimately, when the branch current decreases to satisfy a preset current condition, the energy storage valve is disconnected from a grid.

## Description

### CROSS-REFERENCE TO RELATED APPLICATIONS

The present application claims priority to Chinese Patent Application No. 202310747026.1, filed on June 21, 2023 and entitled "ENERGY STORAGE VALVE OPERATION CONTROL METHOD AND APPARATUS, ENERGY STORAGE SYSTEM, AND COMPUTER DEVICE," and Chinese Patent Application No. 202310747028.0, filed on June 21, 2023 and entitled "ENERGY STORAGE VALVE OPERATION CONTROL METHOD AND APPARATUS, ENERGY STORAGE SYSTEM, AND COMPUTER DEVICE.", which are incorporated herein by reference in their entireties.

### TECHNICAL FIELD

The present application relates to the field of energy storage technologies, and in particular, to an energy storage valve operation control method and apparatus, an energy storage system, a computer device, a storage medium, and a computer program product.

### BACKGROUND

With the development of power technology, energy storage technology has become an important part thereof. Among various energy storage technologies, high-voltage direct-connected energy storage technology integrates a VSC (Voltage Source Converter, voltage source converter) valve with an energy storage valve, offering advantages such as high modularity, low grid losses, and good economic benefits. Incorporating energy storage valves into VSC valves at two ends of a flexible direct current transmission system not only can compensate for peak currents of the flexible direct current transmission system, eliminate surge voltages, and improve grid quality, but also can offer an independent power source during grid failure to provide reliable and high-quality electrical energy.

However, in related technologies, energy storage valves affect the operation of VSC valves at two ends, reducing the operational reliability of energy storage systems.

### SUMMARY

Based on this, it is necessary to provide an energy storage valve operation control method and apparatus, an energy storage system, a computer device, a storage medium, and a computer program product to reduce the impact on VSC valves at two ends when energy storage valves exit operation, improve the exit reliability of energy storage valves, and therefore enhance the operational reliability of an energy storage system.

The present application provides an energy storage valve operation control method, including: gradually reducing a branch current of an energy storage valve in a case that the energy storage valve needs to exit operation; acquiring a power variation of the energy storage valve and sending it to a sending-end voltage source converter valve, where the power variation is used by the sending-end voltage source converter valve to maintain output power; and disconnecting the energy storage valve from a grid in a case that the branch current satisfies a preset current condition.

**In** the above solution, in a case that the energy storage valve needs to exit operation, the branch current of the energy storage valve is gradually reduced. During this process, the power variation of the energy storage valve is acquired in real-time and the acquired power variation is sent to the sending-end voltage source converter valve, enabling the sending-end voltage source converter valve to adjust its output power based on the power variation of the energy storage valve at any time, thereby maintaining stable output power of the sending-end voltage source converter valve. Ultimately, when the branch current decreases to satisfy the preset current condition, the energy storage valve is disconnected from the grid. This solution, while reducing the branch current of the energy storage valve, adjusts the output power of the sending-end voltage source converter valve in combination with the power variation of the energy storage valve, thereby maintaining stable power in a transmission line. This reduces the impact on the VSC valves at two ends when the energy storage valve exits operation, and improves the exit reliability of the energy storage valve, thereby effectively enhancing the operational reliability of an energy storage system.

**In** some embodiments, the gradually reducing a branch current of an energy storage valve in a case that the energy storage valve needs to exit operation includes: gradually reducing the branch current of the energy storage valve in a case that the energy storage valve needs to exit operation and the energy storage valve is in a constant current control mode.

**In** the above solution, in a case that the energy storage valve needs to exit operation, the energy storage valve is further controlled to operate in the constant current control mode, enabling the branch current of the energy storage valve to be gradually reduced with reference to a fixed current, thereby improving the regulation reliability of the branch current of the energy storage valve.

**In** some embodiments, the gradually reducing a branch current of an energy storage valve in a case that the energy storage valve needs to exit operation includes: switching the energy storage valve to a constant current control mode in a case that the energy storage valve needs to exit operation and the energy storage valve is in a constant voltage control mode; and gradually reducing the branch current of the energy storage valve in a case that the energy storage valve is in the constant current control mode.

In the above solution, in a case that the energy storage valve needs to exit operation, the current operating mode of the energy storage valve if further checked, and if the energy storage valve is operating in the constant voltage control mode, it needs to switch to the constant current control mode before performing the exit control of the energy storage valve, thereby further improving exit reliability.

In some embodiments, the gradually reducing a branch current of the energy storage valve includes: setting a target branch current of the energy storage valve to zero and reducing the branch current of the energy storage valve at a preset speed.

**In** the above solution, the target branch current is set to zero, and the branch current is reduced toward the target zero at the preset speed, ensuring that the branch current does not change abruptly during the regulation process of the branch current, thereby further improving the regulation reliability of the branch current.

In some embodiments, the power variation includes an emitted power amount and an absorbed power amount, and the acquiring a power variation of the energy storage valve includes: acquiring a current variation of the energy storage valve; and determining the emitted power amount of the energy storage valve based on the current variation and a voltage value of the energy storage valve; or determining the absorbed power amount of the energy storage valve based on the current variation and a voltage value of the energy storage valve.

In the above solution, the power variation of the energy storage valve may be the emitted power amount or the absorbed power amount, enabling the sending-end voltage source converter valve to adjust output power with reference to an actual output or absorbed power of the energy storage valve. This improves the reliability of output power regulation of the sending-end voltage source converter valve.

In some embodiments, the disconnecting the energy storage valve from a grid in a case that the branch current satisfies a preset current condition includes: controlling a fast switch between the energy storage valve and the grid to turn off in a case that the branch current is less than a preset turn-off impact current; and controlling an isolating switch between the energy storage valve and the grid to turn off in a case that the fast switch is turned off.

In the above solution, the branch current is compared with the preset turn-off impact current, and when the branch current is less than the preset turn-off impact current, the energy storage valve is controlled to exit by sequentially turning off the fast switch and the isolating switch. This offers the advantages of fast response speed and high exit efficiency.

In some embodiments, after the disconnecting the energy storage valve from a grid in a case that the branch current satisfies a preset current condition, further including: controlling an energy storage valve submodule to power off in a case that a battery branch current of the energy storage valve submodule in the energy storage valve is less than a preset power-off current.

In the above solution, after the energy storage valve is disconnected, the energy storage valve submodule in the energy storage valve is further controlled to power off, improving the operational safety after the energy storage valve is disconnected from the grid.

In some embodiments, the controlling an energy storage valve submodule to power off includes: turning off a charging switch of an energy storage module in the energy storage valve submodule.

In the above solution, the power-off control of the energy storage valve submodule is achieved by controlling the turn-off manner of the charging switch of the energy storage module. This offers the advantages of simple control and fast power-off speed.

In some embodiments, after the controlling an energy storage valve submodule to power off in a case that a battery branch current of the energy storage valve submodule in the energy storage valve is less than a preset power-off current, further including: controlling the energy storage valve to enter a cold standby state.

In the above solution, after the energy storage valve submodule is powered off, the energy storage valve is further controlled to enter the cold standby state, enabling quick response when the energy storage valve needs to be put into use next time.

In some embodiments, the energy storage valve operation control method further includes: controlling an energy storage valve submodule of the energy storage valve to power on in a case that the energy storage valve needs to be put into operation; controlling a first terminal of the energy storage valve to connect to a grid bus in a case that the energy storage valve submodule has completed powering on; and controlling a second terminal of the energy storage valve to connect to the grid bus in a case that a branch voltage of the energy storage valve satisfies a preset voltage condition.

In the above solution, when there is a need to put the energy storage valve into operation, the energy storage valve submodule of the energy storage valve is first controlled to power on, and after the energy storage valve submodule completes powering on, the first terminal of the energy storage valve is controlled to connect to the grid bus. Subsequently, the branch voltage of the energy storage valve is acquired in real-time and analyzed. When the branch voltage satisfies the preset voltage condition, the second terminal of the energy storage valve is controlled to connect to the grid bus, completing the insertion control of the energy storage valve. In this solution, the branch voltage of the energy storage valve can be obtained in real-time and analyzed during the insertion process of the energy storage valve, and in a case that the branch voltage satisfies the preset voltage condition, the energy storage valve is fully connected to the grid bus. This can reduce the impact on the grid when the energy storage valve is inserted, improving the insertion reliability of the energy storage valve, thereby further enhancing the operational reliability of the energy storage system.

In some embodiments, the controlling an energy storage valve submodule of the energy storage valve to power on in a case that the energy storage valve needs to be put into operation includes: controlling the energy storage valve submodule of the energy storage valve to power on in a case that the energy storage valve needs to be put into operation and the energy storage valve is in a normal state.

In the above solution, before controlling the energy storage submodule to power on, it further needs to check whether the energy storage valve is in a normal state. Insertion control of the energy storage valve is initiated in a case that the energy storage valve is in a normal state, effectively improving the reliability of performing the insertion operation.

In some embodiments, a manner of determining that the energy storage valve is in a normal state includes: performing a self-check on an energy storage system to which the energy storage valve belongs; and determining that the energy storage valve is in a normal state in a case that the energy storage system passes the self-check and the energy storage valve is in a locked state.

In the above solution, in a case that the energy storage system reports a normal self-check and the energy storage valve itself is locked, the energy storage valve is determined to be in a normal state, offering high judgment accuracy.

In some embodiments, the self-check of the energy storage system includes at least one of: an energy storage valve control and protection system self-check, a power module self-check, a valve cooling system self-check, a battery management system self-check, a battery status self-check, and a main control box and fire protection self-check.

**In** the above solution, the self-check schemes for the energy storage system are diversified, and in practical scenarios, at least one scheme can be selected based on actual needs, effectively improving self-check reliability.

In some embodiments, the controlling an energy storage valve submodule of the energy storage valve to power on in a case that the energy storage valve needs to be put into operation includes: checking an operating state of external switches of the energy storage valve in a case that the energy storage valve needs to be put into operation; and controlling the energy storage valve submodule of the energy storage valve to power on in a case that all external switches of the energy storage valve are in a turn-off state.

In the above solution, before powering on the energy storage valve submodule, there is a need to perform detection for the state of the external switches of the energy storage valve, and inserting the energy storage valve is performed when all external switches of the energy storage valve are in a turn-off state, ensuring a safe and controllable insertion process.

In some embodiments, after the checking an operating state of external switches of the energy storage valve in a case that the energy storage valve needs to be put into operation, further including: starting timing in a case that at least one external switch of the energy storage valve is in a turned-on state; checking an operating state of the external switches of the energy storage valve when a first preset duration elapses; and terminating inserting the energy storage valve in a case that the at least one external switch of the energy storage valve is still in the turned-on state.

In the above solution, in a case that an external switch of the energy storage valve is turned on, the first preset duration is set to wait for a change in the state of the external switch of the energy storage valve, enabling timely insertion when the state of the external switch of the energy storage valve changes, further improving the insertion reliability.

In some embodiments, the controlling an energy storage valve submodule of the energy storage valve to power on includes: controlling a valve cooling system to be put into operation; controlling a precharge resistor insertion switch of the energy storage valve submodule of the energy storage valve to turn on; and turning off the precharge resistor insertion switch and controlling a precharge resistor bypass switch of the energy storage valve submodule to turn on in a case that the energy storage valve submodule has completed precharging.

In the above solution, before powering on the energy storage valve submodule, the valve cooling system needs to be put into operation, followed by initiating precharging and then normal charging. This can effectively improve the safety of powering on the energy storage valve submodule.

In some embodiments, a manner of determining that the energy storage valve submodule has completed precharging includes: acquiring a capacitor voltage of a power module of the energy storage valve submodule; and determining that the energy storage valve submodule has completed precharging in a case that a difference between a battery voltage of an energy storage module in the energy storage valve submodule and the capacitor voltage is less than a preset voltage threshold.

In the above solution, in a case that the difference between the capacitor voltage of the power module and the battery voltage of the energy storage module is less than the preset voltage threshold, precharging is considered complete, effectively reducing current impact on a battery during power-on and extending the battery lifespan.

In some embodiments, the controlling a first terminal of the energy storage valve to connect to a grid bus includes: controlling a first fast switch and a first isolating switch between the first terminal of the energy storage valve and the grid bus to turn on.

In the above solution, controlled connection between the first terminal of the energy storage valve to the grid bus is achieved by turning on the first fast switch and the first isolating switch. This offers fast response speed and high connection efficiency.

In some embodiments, the controlling a second terminal of the energy storage valve to connect to the grid bus in a case that a branch voltage of the energy storage valve satisfies a preset voltage condition includes: acquiring a bus voltage measurement value and the branch voltage of the energy storage valve; and controlling the second terminal of the energy storage valve to connect to the grid bus in a case that the branch voltage is within a preset multiple range of the bus voltage measurement value and remains so for a second preset duration.

In the above solution, controlled connection of the second terminal of the energy storage valve is performed based on the relationship between the real-time acquired branch voltage and the bus voltage measurement value, mitigating the impact of the second terminal connection on the bus voltage, thereby reducing the impact of the second terminal connection of the energy storage valve on the grid bus and improving the success rate of insertion.

In some embodiments, the acquiring a bus voltage measurement value and the branch voltage of the energy storage valve includes: controlling the energy storage valve submodule of the energy storage valve to be put into operation in a constant direct current voltage control mode; acquiring a first voltage value of the grid bus connected to the first terminal of the energy storage valve, a second voltage value of the grid bus connected to the second terminal of the energy storage valve, and a third voltage value of the second terminal of the energy storage valve; determining the bus voltage measurement value based on the first voltage value and the second voltage value; and determining the branch voltage of the energy storage valve based on the first voltage value and the third voltage value.

In the above solution, the bus voltage measurement value and the branch voltage are calculated based on the actually collected voltage values, improving the accuracy of the bus voltage measurement value and the branch voltage.

In some embodiments, the controlling a second terminal of the energy storage valve to connect to the grid bus includes: controlling a second fast switch and a second isolating switch between the second terminal of the energy storage valve and the grid bus to turn on.

In the above solution, controlled connection of the second terminal of the energy storage valve to the grid bus is achieved by turning on the second fast switch and the second isolating switch. This offers fast response speed and high connection efficiency.

The present application provides an energy storage valve operation control apparatus, including: a branch current control module configured to gradually reduce a branch current of an energy storage valve in a case that the energy storage valve needs to exit operation; a power variation analysis module configured to acquire a power variation of the energy storage valve and send it to a sending-end voltage source converter valve, where the power variation is used by the sending-end voltage source converter valve to maintain output power; and a disconnection control module configured to disconnect the energy storage valve from a grid in a case that the branch current satisfies a preset current condition.

The present application further provides an energy storage system, including: a fast switch; a sending-end voltage source converter valve, a receiving-end voltage source converter valve, an energy storage valve, an isolating switch, and a control apparatus. The sending-end voltage source converter valve has two ends respectively connected to grid buses. The receiving-end voltage source converter valve has two ends respectively connected to the grid buses. The energy storage valve is connected to the fast switch. The isolating switch is connected to the fast switch and the grid buses. The control apparatus is connected to the sending-end voltage source converter valve, the receiving-end voltage source converter valve, the fast switch, the isolating switch, and the energy storage valve, and configured to execute the energy storage valve operation control method described above.

In some embodiments, the fast switch includes a first fast switch and a second fast switch, the isolating switch includes a first isolating switch and a second isolating switch, the first fast switch is connected to a first terminal of the energy storage valve and the first isolating switch, the first isolating switch is connected to the grid bus, the second fast switch is connected to a second terminal of the energy storage valve and the second isolating switch, the second isolating switch is connected to the grid bus, and the first fast switch, the first isolating switch, the second fast switch, and the second isolating switch are respectively connected to the control apparatus.

The present application further provides a computer device, including a memory and a processor. The memory stores a computer program, and when the processor executes the computer program, the steps of the energy storage valve operation control method described above are implemented.

The present application further provides a computer-readable storage medium, having a computer program stored thereon. When the computer program is executed by a processor, the steps of the energy storage valve operation control method described above are implemented.

The present application further provides a computer program product, including a computer program. When the computer program is executed by a processor, the steps of the energy storage valve operation control method described above are implemented.

### BRIEF DESCRIPTION OF DRAWINGS

To more clearly illustrate the technical solutions in the embodiments of the present application, the drawings required for use in the embodiments of the present application are briefly introduced below. It is apparent that the drawings described below are only some embodiments of the present application, and those skilled in the art can obtain other drawings based on these drawings without creative effort. In the accompanying drawings:
FIG. 1 is a schematic structural diagram of an energy storage system in some embodiments of the present application;
FIG. 2 is a schematic structural diagram of an energy storage system in some other embodiments of the present application;
FIG. 3 is a schematic flowchart of an energy storage valve operation control method in some embodiments of the present application;
FIG. 4 is a schematic structural diagram of an energy storage valve in some embodiments of the present application;
FIG. 5 is a schematic structural diagram of an energy storage valve submodule in some embodiments of the present application;
FIG. 6 is a schematic structural diagram of a VSC valve in some embodiments of the present application;
FIG. 7 is a schematic flowchart of an energy storage valve operation control method in some other embodiments of the present application;
FIG. 8 is a schematic flowchart of an energy storage valve operation control method in still other embodiments of the present application;
FIG. 9 is a schematic flowchart of an energy storage valve operation control method in additional embodiments of the present application;
FIG. 10 is a schematic flowchart of an energy storage valve operation control method in some other embodiments of the present application;
FIG. 11 is a schematic flowchart of an energy storage valve operation control method in still other embodiments of the present application;
FIG. 12 is a flowchart of an energy storage valve operation control method in some embodiments of the present application;
FIG. 13 is a schematic structural diagram of an energy storage system in still other embodiments of the present application;
FIG. 14 is a schematic flowchart of an energy storage valve operation control method in additional embodiments of the present application;
FIG. 15 is a schematic flowchart of an energy storage valve submodule power-on process in some embodiments of the present application;
FIG. 16 is a schematic flowchart of an energy storage valve submodule power-on process in some other embodiments of the present application;
FIG. 17 is a schematic flowchart of an energy storage valve operation control method in some other embodiments of the present application;
FIG. 18 is a schematic flowchart of a voltage acquisition process in some embodiments of the present application;
FIG. 19 is a flowchart of an energy storage valve operation control method in some embodiments of the present application;
FIG. 20 is a flowchart of an energy storage valve operation control method in some other embodiments of the present application;
FIG. 21 is a schematic structural diagram of an energy storage valve operation control apparatus in some embodiments of the present application;
FIG. 22 is a schematic structural diagram of an energy storage valve operation control apparatus in some other embodiments of the present application;
FIG. 23 is a schematic structural diagram of an energy storage valve operation control apparatus in still other embodiments of the present application; and
FIG. 24 is a schematic diagram of an internal structure of a computer device in some embodiments of the present application.

### DESCRIPTION OF EMBODIMENTS

The embodiments of the technical solutions of the present application are described in detail below with reference to the accompanying drawings. The following embodiments are merely intended for a clearer description of the technical solutions of the present application and therefore are used as examples which do not constitute any limitations on the protection scope of the present application.

Unless otherwise defined, all technical and scientific terms used herein have the same meaning as commonly understood by those skilled in the technical field of the present application; the terms used herein are only for the purpose of describing specific embodiments and are not intended to limit the present application; the terms "include" and "have" and any variations thereof in the specification, claims, and the above description of the drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or primary-secondary relationship of the indicated technical features. In the description of the embodiments of the present application, "multiple" means two or more, unless otherwise explicitly and specifically defined.

In this specification, reference to "embodiment" means that specific features, structures, or characteristics described with reference to the embodiment may be incorporated in at least one embodiment of the present application. The appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates that the associated objects before and after are in an "or" relationship.

In the description of the embodiments of the present application, the term "multiple" refers to two or more (including two), similarly, "multiple groups" refers to two or more groups (including two groups), and "multiple pieces" refers to two or more pieces (including two pieces).

**In** the description of the embodiments of the present application, unless otherwise specified and defined explicitly, the terms "mount," "connect," "join," and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. For those skilled in the art, the specific meanings of the above terms in the embodiments of the present application can be understood based on specific circumstances.

Currently, from the perspective of market trends, the application of energy storage systems is becoming increasingly widespread, bringing great convenience to daily production and life. High-voltage direct-connected energy storage, with its highly modular structure, meets the demands for high efficiency, economy, and safety, and is gradually being developed and applied.

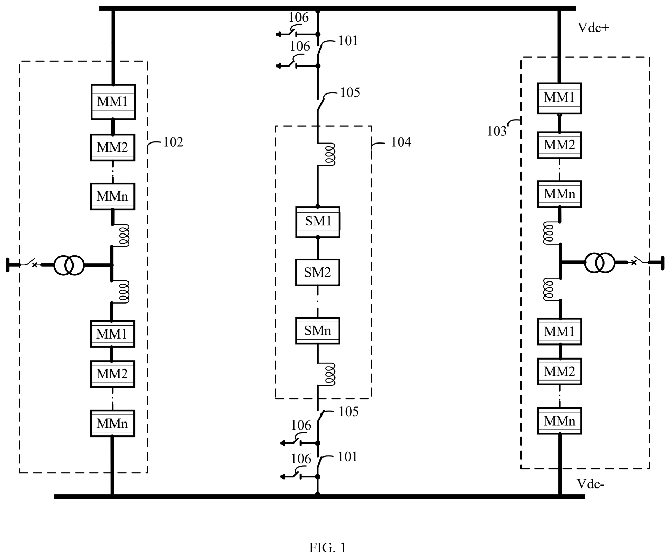

A high-voltage direct-connected energy storage system integrates a voltage source converter valve (that is, a VSC valve) and an energy storage valve. Referring to FIG. 1, an energy storage valve 104 is connected between a sending-end voltage source converter valve 102 and a receiving-end voltage source converter valve 103, and the number of energy storage valves is not unique. For ease of understanding, one energy storage valve 104 is used as an example for description in FIG. 1. To achieve reliable connection between the energy storage valve 104 and the grid, components such as a fast switch 105, an isolating switch 101, and a grounding switch 106 are provided between the energy storage valve 104 and the grid bus. The energy storage valve 104 generally includes multiple cascaded energy storage valve submodules, and each energy storage valve submodule includes a power conversion part and an energy storage part, ultimately forming a high-voltage direct-connected energy storage system.

During the operation of a high-voltage direct-connected energy storage system, the energy storage valve is often put into or withdrawn from operation based on actual needs. For example, when the energy storage valve undergoes maintenance, the energy storage valve needs to be controlled to exit operation. In the process of exiting the energy storage valve, the connection between the VSC valve, the energy storage valve, and the grid is generally disconnected sequentially, thereby withdrawing the energy storage valve from the energy storage system.

However, this exit method causes a sudden change in the output power of the high-voltage direct-connected energy storage system, affecting the normal operation of the sending-end voltage source converter valve and the receiving-end voltage source converter valve, and in severe cases, even damaging the sending-end voltage source converter valve and the receiving-end voltage source converter valve, thereby resulting in poor exit reliability of the energy storage valve.

The process of putting the energy storage valve into operation is generally achieved through the alternating current or direct current manner. That is, after processes such as boosting and inversion, the energy storage valve is connected to an alternating current grid, or directly connected to a direct current grid. However, whether using the alternating current or direct current manner, connecting the energy storage valve to the grid inevitably causes voltage oscillations, which leads to insertion failure in mild cases or causes damage and shutdown of the energy storage system in severe cases. It can be seen that the energy storage valve has poor insertion reliability.

To mitigate the above phenomena, it has found through research that during the exit process of the energy storage valve, the output power of the sending-end voltage source converter valve can be adjusted in combination with the exit state of the energy storage valve to maintain stable power in the transmission line of the high-voltage direct-connected energy storage system, thereby improving the exit reliability of the energy storage valve. In addition/alternatively, during the insertion process of the energy storage valve, the branch voltage of the energy storage valve can be monitored in real-time, first controlling one end of the energy storage valve to connect to the grid, and when the branch voltage changes to a level that does not cause voltage oscillations, connecting the other end of the energy storage valve to the grid, thereby mitigating voltage oscillations and improving the insertion reliability of the energy storage valve.

Based on the above considerations, an embodiment of the present application provides an energy storage valve operation control method. In a case that the energy storage valve needs to exit operation, the branch current of the energy storage valve is gradually controlled to reduce, and during this process, the power variation of the energy storage valve is acquired in real-time, and the acquired power variation is sent to the sending-end voltage source converter valve, enabling the sending-end voltage source converter valve to adjust its output power based on the power variation of the energy storage valve, maintaining stable output power of the sending-end voltage source converter valve. Ultimately, when the branch current decreases to satisfy a preset current condition, the energy storage valve is disconnected from the grid.

**In** a case that there is a need to put the energy storage valve into operation, the energy storage valve submodules of the energy storage valve are first controlled to power on. In a case that the energy storage valve submodule has completed powering on, the first terminal of the energy storage valve is controlled to connect to the grid bus. Subsequently, the branch voltage of the energy storage valve is acquired and analyzed in real-time, and when the branch voltage satisfies a preset voltage condition, the second terminal of the energy storage valve is controlled to connect to the grid bus, completing the insertion control of the energy storage valve.

Through this control method, while reducing the branch current of the energy storage valve, the output power of the sending-end voltage source converter valve is adjusted in combination with the power variation of the energy storage valve, maintaining stable power in the transmission line, reducing the impact on the voltage source converter valves at two ends when the energy storage valve exits operation, and improving the exit reliability of the energy storage valve. During the insertion process of the energy storage valve, the branch voltage of the energy storage valve is acquired and analyzed in real-time, and only when the branch voltage satisfies the preset voltage condition is the energy storage valve fully connected to the grid bus, reducing the impact on the grid during insertion and improving the insertion reliability of the energy storage valve.

The energy storage valve operation control method proposed in the embodiments of the present application is applied in an energy storage system, specifically, in energy storage systems such as battery energy storage, supercapacitor energy storage, flywheel energy storage, or compressed gas energy storage, without specific limitation. For ease of understanding, the following descriptions use the application of the energy storage valve operation control method in a battery energy storage system as an example. The specific type of energy storage system is not unique, as long as it is an energy storage system constructed using an energy storage valve, a sending-end voltage source converter valve, and a receiving-end voltage source converter valve. More specifically, the energy storage valve operation control method is applied in a high-voltage direct-connected energy storage system.

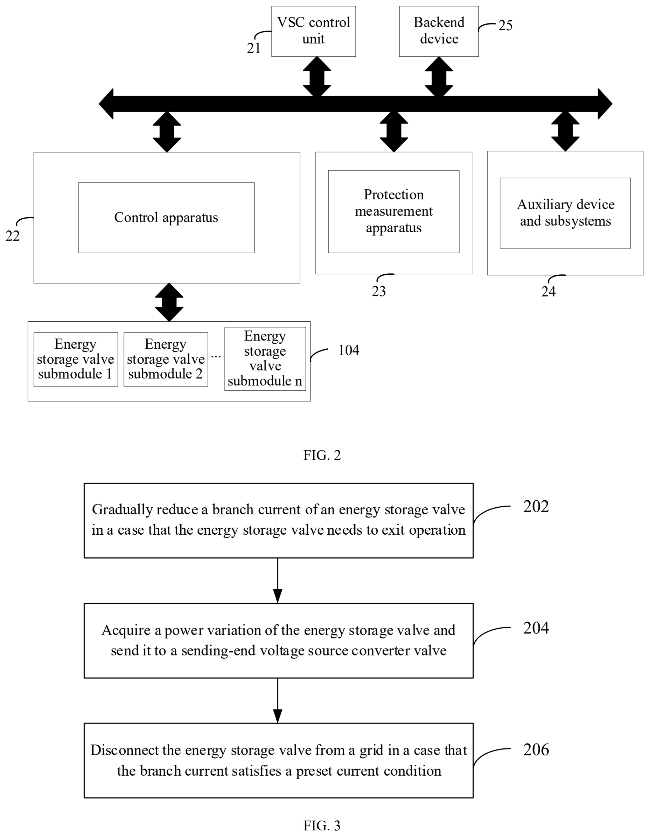

For a specific structure of a high-voltage direct-connected energy storage system, reference can be made to FIG. 2. The energy storage system includes a VSC control unit 21, a control apparatus 22, an energy storage valve 104, a protection measurement apparatus 23, and various auxiliary equipment and subsystems 24. The VSC control unit 21, control apparatus 22, protection measurement apparatus 23, and various auxiliary equipment and subsystems 24 are respectively connected to a control bus, and the energy storage valve 104 is connected to the control apparatus 22, operating under the control of the control apparatus 22. In some embodiments, the energy storage system is also connected to a backend device 106 to receive commands issued by the backend device 106 or to send operation-related parameters to the backend device 106.

For ease of understanding the technical solutions of the present application, the following embodiments can be understood as the energy storage valve operation control method being applied in a high-voltage direct-connected energy storage system. Referring to FIG. 3, the present application provides an energy storage valve operation control method, including step 202, step 204, and step 206.

Step 202: Gradually reduce a branch current of an energy storage valve in a case that the energy storage valve needs to exit operation.

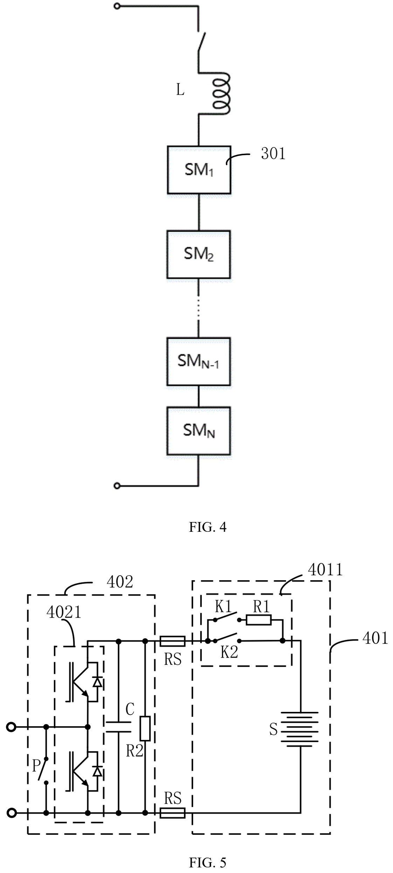

Specifically, the energy storage valve is an apparatus formed by cascading multiple energy storage valve submodules, capable of storing and accessing electrical energy. Referring to FIG. 4, the energy storage valve includes multiple energy storage valve submodules 301 and an inductor L. The multiple energy storage valve submodules 301 are cascaded, then connected to the inductor L, and further connected to the grid for operation through the inductor L.

The structure of the energy storage valve submodule is not unique. In some embodiments, referring to FIG. 5, a half-bridge energy storage valve submodule is used as an example for description. The energy storage valve submodule includes a power module 402, an energy storage module 401, and a fuse RS. The energy storage module 401 and the power module 402 are connected through the fuse RS.

The energy storage module 401 includes a battery S (which may be multiple battery cells or units formed by series and/or parallel connections) and a charging circuit 4011. One end of the battery S is connected to the fuse RS through the charging circuit 4011, and the other end of the battery S is connected to another fuse RS. In some embodiments, the charging circuit 4011 includes a precharge resistor R1, a precharge resistor insertion switch K1, and a precharge resistor bypass switch K2. One end of the battery S is connected to the precharge resistor R1 and the precharge resistor bypass switch K2, respectively. The precharge resistor insertion switch K1 is connected to the precharge resistor R1, and the precharge resistor bypass switch K2 and the precharge resistor insertion switch K1 are respectively connected to the fuse RS. The power module 402 includes a half-bridge power unit 4021, a bypass switch P, a capacitor C, and a balancing resistor R2. The bypass switch P is provided between a first terminal and a second terminal of the half-bridge power unit 4021. The two ends of the capacitor C are connected to a third end and a fourth end of the half-bridge power unit 4021, respectively. The balancing resistor R2 is connected in parallel with the capacitor C, and the two ends of the balancing resistor R2 are each connected to a fuse RS. It can be understood that in other embodiments, the energy storage valve submodule may also be a full-bridge structure, selected based on actual needs.

The energy storage valve operation control method provided in the present application is specifically implemented through a control apparatus, with the energy storage valve, the sending-end voltage source converter valve, and the receiving-end voltage source converter valve respectively connected to the control apparatus. It should be noted that the method for determining whether the energy storage valve needs to exit operation is not unique. In some embodiments, when there is a need for the energy storage valve to exit, an exit signal is fed back to the control apparatus. Thus, in this embodiment, whether the energy storage valve needs to exit operation can be determined by checking whether an exit signal is received. In other embodiments, whether the energy storage valve needs to exit operation may alternatively be determined by checking whether a signal related to maintenance of the energy storage valve is received.

The control apparatus reduces the branch current of the energy storage valve not in a unique manner. In a more detailed embodiment, it can be achieved by controlling the number of energy storage valve submodules put into operation in the energy storage valve, which can be specifically selected based on actual needs.

Step 204: Acquire a power variation of the energy storage valve and send it to a sending-end voltage source converter valve.

Specifically, the power variation is used by the sending-end voltage source converter valve to maintain output power. The power variation is the change in power of the energy storage valve at the current branch current relative to the power at the previous branch current reduction. The sending-end voltage source converter valve is the voltage source converter valve provided at the sending end of the energy storage system. The converter valve is a power apparatus that connects three-phase alternating current voltage to a direct current terminal to achieve the desired direct current voltage and power control.

During the process of the control apparatus gradually reducing the branch current of the energy storage valve, the control apparatus acquires the power variation of the energy storage valve for a moment when it reduces the branch current of the energy storage valve. Subsequently, the control apparatus sends the power variation to the sending-end voltage source converter valve. Upon receiving the power variation, the sending-end voltage source converter valve adjusts its output power accordingly, ensuring that the output power of the sending-end voltage source converter valve remains at a stable value. In this way, as the branch current of the energy storage valve continues to decrease, the power of the transmission line of the energy storage system remains stable, effectively reducing the impact of the energy storage valve's exit on the sending-end voltage source converter valve and the receiving-end voltage source converter valve, achieving high exit reliability.

It can be understood that the method for the sending-end voltage source converter valve to adjust output power based on the power variation to maintain constant output power is not unique. In a more detailed embodiment, it can be achieved through voltage outer loop and current inner loop control, selected based on actual needs.

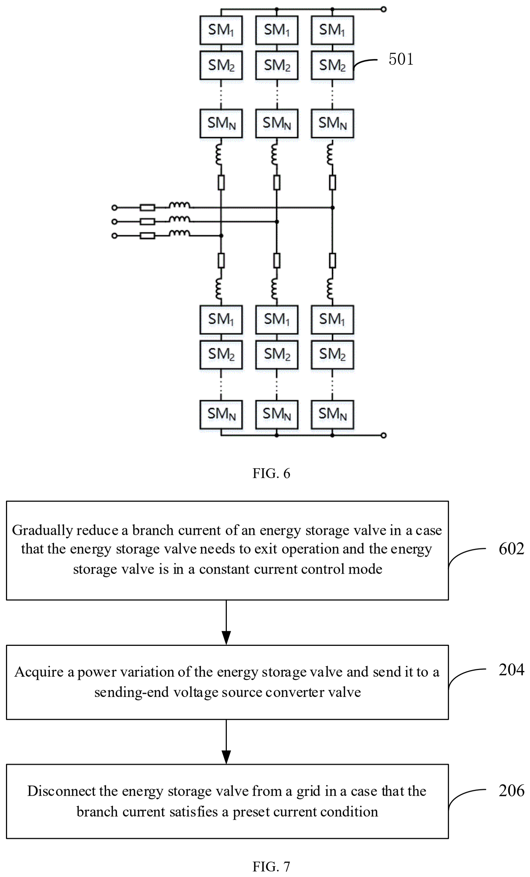

It should be noted that the specific type of the sending-end voltage source converter valve is not unique. In some embodiments, referring to FIG. 6, the sending-end voltage source converter valve adopts an MMC (Modular Multilevel Converter, modular multilevel converter) structure, including multiple identical and cascaded submodules 501.

Step 206: Disconnect the energy storage valve from a grid in a case that the branch current satisfies a preset current condition.

Specifically, the preset current condition is a predefined condition that the branch current must satisfy for the energy storage valve to safely exit operation. During the process of the control apparatus gradually reducing the branch current of the energy storage valve, the real-time branch current is compared and analyzed against the preset current condition. When the branch current satisfies the preset current condition, the energy storage valve is disconnected from the grid. Specifically, the energy storage valve is connected to a grid bus in the energy storage system, and disconnecting the energy storage valve from the grid means disconnecting the energy storage valve from the grid bus.

In some embodiments, the grid bus includes a positive grid bus and a negative grid bus, and the two ends of the energy storage valve are respectively connected to the positive grid bus and the negative grid bus. Therefore, when disconnecting the energy storage valve from the grid bus, the connections between the energy storage valve and both the positive grid bus and the negative grid bus must be disconnected.

In the above solution, in a case that the energy storage valve needs to exit operation, the branch current of the energy storage valve is gradually reduced. During this process, the power variation of the energy storage valve is acquired in real-time and the acquired power variation is sent to the sending-end voltage source converter valve, enabling the sending-end voltage source converter valve to adjust its output power based on the power variation of the energy storage valve at any time, thereby maintaining stable output power of the sending-end voltage source converter valve. Ultimately, when the branch current decreases to satisfy the preset current condition, the energy storage valve is disconnected from the grid. This solution, while reducing the branch current of the energy storage valve, adjusts the output power of the sending-end voltage source converter valve in combination with the power variation of the energy storage valve, thereby maintaining stable power in a transmission line. This reduces the impact on the VSC valves at two ends when the energy storage valve exits operation, and improves the exit reliability of the energy storage valve.

Referring to FIG. 7, in some embodiments, step 202 includes step 602:
Step 602: Gradually reduce the branch current of the energy storage valve in a case that the energy storage valve needs to exit operation and the energy storage valve is in a constant current control mode.

Specifically, the constant current control mode refers to a control method in which, when the current deviates, regulation is performed to return the current to a fixed reference current, ultimately maintaining the current at the fixed reference current to achieve constant direct current. In the solution of this embodiment, when the control apparatus determines that the energy storage valve needs to exit operation, it further determines the current control mode of the energy storage valve. If the energy storage valve is in the constant current control mode, the action of gradually reducing the branch current of the energy storage valve is initiated.

In the above solution, in a case that the energy storage valve needs to exit operation, the energy storage valve is further controlled to operate in the constant current control mode, enabling the branch current of the energy storage valve to be gradually reduced with reference to a fixed current, thereby improving the regulation reliability of the branch current of the energy storage valve.

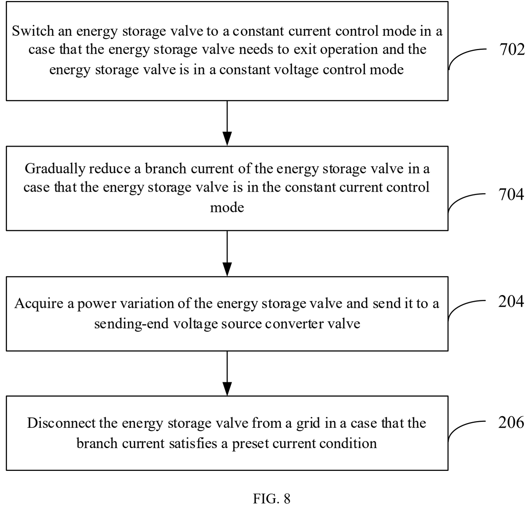

Referring to FIG. 8, in some embodiments, step 202 includes step 702 and step 704:
Step 702: Switch the energy storage valve to a constant current control mode in a case that the energy storage valve needs to exit operation and the energy storage valve is in a constant voltage control mode.
Step 704: Gradually reduce the branch current of the energy storage valve in a case that the energy storage valve is in the constant current control mode.

Specifically, the constant voltage control mode refers to a control method in which, when the voltage deviates, regulation is performed to return the voltage to a fixed reference voltage, ultimately maintaining the voltage at the fixed reference voltage to achieve constant direct current voltage. In conventional energy storage valve operation control schemes, the constant voltage control mode is generally used to control the energy storage valve. Thus, in the solution of this embodiment, when the energy storage valve needs to exit operation, the control apparatus needs to check whether the energy storage valve is currently controlled in the constant voltage control mode. If the energy storage valve is controlled in the constant voltage control mode, it is switched to the constant current control mode, ultimately performing the exit control of the energy storage valve in the constant current control mode.

In the above solution, in a case that the energy storage valve needs to exit operation, the current operating mode of the energy storage valve is further checked, and if the energy storage valve is operating in the constant voltage control mode, it needs to switch to the constant current control mode before performing the exit control of the energy storage valve, thereby further improving exit reliability.

In some embodiments, gradually reducing the branch current of the energy storage valve includes: setting a target branch current of the energy storage valve to zero and reducing the branch current of the energy storage valve at a preset speed.

Specifically, the target branch current is a fixed reference current corresponding to the constant current control mode when the energy storage valve is under controlled operation in the constant current control mode. In the solution of this embodiment, during the exit control of the energy storage valve, the target branch current of the branch current of the energy storage valve is first updated to zero. To regulate the branch current to the target branch current, the energy storage valve submodules of the energy storage valve are controlled to switch at a preset speed, thereby gradually reducing the branch current of the energy storage valve at the preset speed.

In the above solution, the target branch current is set to zero, and the branch current is reduced toward the target zero at the preset speed, ensuring that the branch current does not change abruptly during the regulation process of the branch current, thereby further improving the regulation reliability of the branch current.

In some embodiments, the power variation includes an emitted power amount and an absorbed power amount, and acquiring the power variation of the energy storage valve includes: acquiring a current variation of the energy storage valve; determining the emitted power amount of the energy storage valve based on the current variation and a voltage value of the energy storage valve; or determining the absorbed power amount of the energy storage valve based on the current variation and the voltage value of the energy storage valve.

Specifically, the emitted power is the output power of the energy storage valve, and the absorbed power is the input power of the energy storage valve. Accordingly, the emitted power amount is the change amount between the current state of the energy storage valve and the power output at the previous branch current reduction. The absorbed power amount is the change amount between the current state of the energy storage valve and the power input at the previous branch current reduction. The current variation is the difference between the current branch current and the previous branch current.

During the process of reducing the branch current of the energy storage valve for exit control, depending on the actual operating condition, the energy storage valve may emit power or absorb power. If the energy storage valve outputs power, the emitted power amount is calculated based on the current variation and the voltage value of the energy storage valve and transmitted to the sending-end voltage source converter valve. If the energy storage valve absorbs power, the absorbed power amount is calculated based on the current variation and the voltage value of the energy storage valve and transmitted to the sending-end voltage source converter valve.

Ultimately, the sending-end voltage source converter valve performs the corresponding output power adjustment operation based on the type of power variation received currently. When the energy storage valve outputs power, the emitted power of the sending-end voltage source converter valve is increased by a corresponding amount based on the emitted power amount of the energy storage valve, that is, if the emitted power of the energy storage valve decreases by ΔP, the emitted power of the sending-end voltage source converter valve increases by ΔP. When the energy storage valve absorbs power, the absorbed power of the sending-end voltage source converter valve is reduced by a corresponding amount based on the absorbed power amount of the energy storage valve, that is, if the absorbed power of the energy storage valve decreases by ΔP, the emitted power of the sending-end voltage source converter valve decreases by ΔP, ultimately maintaining stable transmission power of the sending-end voltage source converter valve.

In the above solution, the power variation of the energy storage valve may be the emitted power amount or the absorbed power amount, enabling the sending-end voltage source converter valve to adjust output power with reference to an actual output or absorbed power of the energy storage valve. This improves the reliability of output power regulation of the sending-end voltage source converter valve.

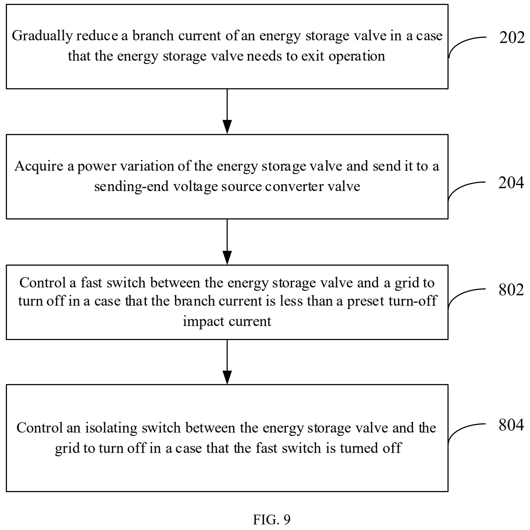

Referring to FIG. 9, in some embodiments, step 206 includes step 802 and step 804:
Step 802: Control a fast switch between the energy storage valve and the grid to turn off in a case that the branch current is less than a preset turn-off impact current.
Step 804: Control an isolating switch between the energy storage valve and the grid to turn off in a case that the fast switch is turned off.

Specifically, the preset turn-off impact current is a preset current threshold for the impact generated when the fast switch or isolating switch is turned off. During the process of the control apparatus gradually reducing the branch current of the energy storage valve, analyzing the power variation based on the current variation, and transmitting it to the sending-end voltage source converter valve, the current branch current is compared with the preset turn-off impact current in real-time. When the branch current is less than the preset turn-off impact current, the locking control of the energy storage valve is performed. Specifically, in this case, the control apparatus first turns off the fast switch between the energy storage valve and the grid bus. During this process, the control apparatus acquires the state of the fast switch in real-time, and when the fast switch has been turned off, further controls the isolating switch between the energy storage valve and the grid bus to turn off, thereby disconnecting the energy storage valve from the grid.

It should be noted that in some embodiments, the two ends of the energy storage valve are respectively connected to the positive grid bus and the negative grid bus through one fast switch and one isolating switch. Thus, in this embodiment, the controlling a fast switch between the energy storage valve and the grid to turn off includes: controlling the fast switch between the first terminal of the energy storage valve and the positive grid bus to turn off, and controlling the fast switch between the second terminal of the energy storage valve and the negative grid bus to turn off. The controlling an isolating switch between the energy storage valve and the grid to turn off includes: controlling the isolating switch between the first terminal of the energy storage valve and the positive grid bus to turn off, and controlling the isolating switch between the second terminal of the energy storage valve and the negative grid bus to turn off.

In the above solution, the branch current is compared with the preset turn-off impact current, and when the branch current is less than the preset turn-off impact current, the energy storage valve is controlled to exit by sequentially turning off the fast switch and the isolating switch. This offers the advantages of fast response speed and high exit efficiency.

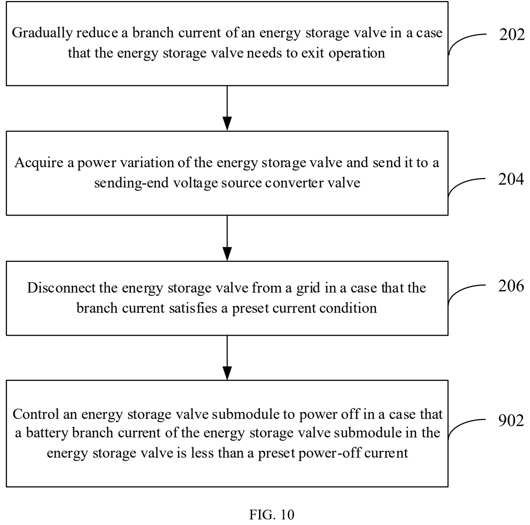

Referring to FIG. 10, in some embodiments, after step 206, the method further includes step 902:
Step 902: Control the energy storage valve submodule to power off in a case that a battery branch current of an energy storage valve submodule in the energy storage valve is less than a preset power-off current.

Specifically, the battery branch current is the current in the branch where the energy storage module of the energy storage valve submodule is located. The preset power-off current is a predefined current threshold required for the energy storage module in the energy storage valve submodule to exit operation. In the solution of this embodiment, after disconnecting the energy storage valve from the grid, for each energy storage valve submodule, its battery branch current is acquired and compared with the preset power-off current. When the battery branch current is less than the preset power-off current, the energy storage valve submodule is controlled to power off.

In the above solution, after the energy storage valve is disconnected, the energy storage valve submodule in the energy storage valve is further controlled to power off, improving the operational safety after the energy storage valve is disconnected from the grid.

In some embodiments, the controlling an energy storage valve submodule to power off includes: turning off a charging switch of an energy storage module in the energy storage valve submodule.

Specifically, referring to FIG. 5, each energy storage valve submodule includes an energy storage module and a power module. The energy storage module includes an apparatus such as a battery for storing electrical energy. Thus, controlling the energy storage valve submodule to power off essentially means disconnecting the connection between the energy storage module and the power module. In the solution of this embodiment, the energy storage module further includes a charging circuit, and the battery of the energy storage module is connected to the power module through the charging circuit. Therefore, it is only necessary to turn off the charging switch of the energy storage module, that is, the precharge resistor insertion switch K1 and the precharge resistor bypass switch K2 as shown.

**In** the above solution, the power-off control of the energy storage valve submodule is achieved by controlling the turn-off manner of the charging switch of the energy storage module. This offers the advantages of simple control and fast power-off speed.

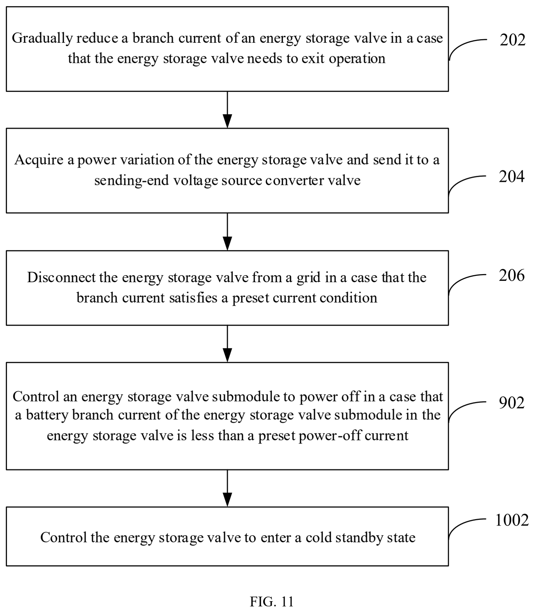

Referring to FIG. 11, in some embodiments, after step 902, the method further includes step 1002:
Step 1002: Control the energy storage valve to enter a cold standby state.

Specifically, the cold standby state refers to a state where the circuit breakers and isolating switches on both sides of the line where the energy storage valve is located are in the turn-off position, with a clear turn-off point from the grid, but the line itself is in good condition. In the solution of this embodiment, after controlling the energy storage valve to complete the exit, the energy storage valve is further controlled to enter the cold standby state, so that the energy storage valve can respond promptly when there is a subsequent need for insertion.

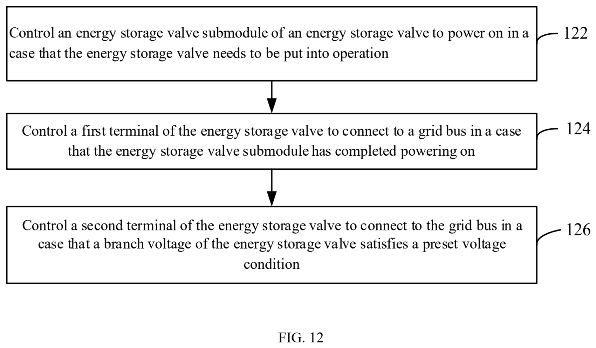

Referring to FIG. 12, in some embodiments, the energy storage valve operation control method further includes step 122, step 124, and step 126:
Step 122: Control an energy storage valve submodule of the energy storage valve to power on in a case that the energy storage valve needs to be put into operation.
Step 124: Control a first terminal of the energy storage valve to connect to a grid bus in a case that the energy storage valve submodule has completed powering on.
Step 126: Control a second terminal of the energy storage valve to connect to the grid bus in a case that a branch voltage of the energy storage valve satisfies a preset voltage condition.

Specifically, the structure of the energy storage valve, reference can be made to FIG. 4, and the structure of the energy storage valve submodule of the energy storage valve is not unique, as shown in FIG. 5. In the solution of this embodiment, the control apparatus monitors in real-time whether the energy storage valve needs to be put into operation. When it is detected that the energy storage valve needs to be put into operation, each energy storage valve submodule in the energy storage valve is first controlled to power on, while the energy storage valve remains disconnected from the grid.

It should be noted that the method for determining whether the energy storage valve needs to be put into operation is not unique. In some embodiments, it may be considered that the energy storage valve needs to be put into operation after the control apparatus receives a related command for inserting the energy storage valve. In other embodiments, the control apparatus may analyze the current operating state of the energy storage system to determine whether the energy storage system currently requires the energy storage valve to be put into operation, set based on actual needs.

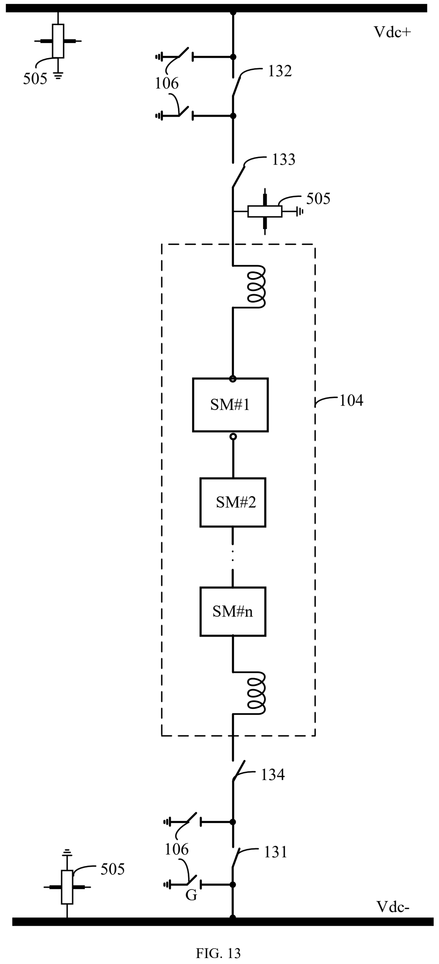

Referring to FIG. 13, the energy storage valve 104 is connected to the grid for operation by connecting to the grid bus. Specifically, the grid bus includes a positive grid bus (that is, Vdc+) and a negative grid bus (that is, Vdc-). The first terminal of the energy storage valve 104 is connected to the positive grid bus, and the second terminal of the energy storage valve 104 is connected to the negative grid bus; or the first terminal of the energy storage valve 104 is connected to the negative grid bus, and the second terminal of the energy storage valve 104 is connected to the positive grid bus, selected based on actual needs. For ease of understanding the technical solutions of the present application, the following descriptions use the example where the first terminal of the energy storage valve 104 is connected to the negative grid bus, and the second terminal of the energy storage valve 104 is connected to the positive grid bus.

After the control apparatus controls the energy storage valve submodules to power on, it monitors the voltage of the energy storage valve submodules to determine whether the energy storage valve has completed powering on. When all energy storage valve submodules in the energy storage valve have completed powering on, the first terminal of the energy storage valve is connected to the negative grid bus, establishing a reference voltage benchmark for the energy storage valve submodules, that is, Vdc-. The preset voltage condition is a predefined condition that the branch voltage of the energy storage valve must satisfy in a case that the connection of the energy storage valve does not cause voltage oscillation of the grid. The branch voltage is the voltage of the second terminal of the energy storage valve relative to the negative grid bus. After the control apparatus controls the first terminal of the energy storage valve to connect to the negative grid bus, the control apparatus monitors the branch voltage of the energy storage valve, comparing the acquired branch voltage with the preset voltage condition. When the branch voltage satisfies the preset voltage condition, the second terminal of the energy storage valve is controlled to connect to the grid bus, that is, the positive grid bus, thereby completing the insertion control of the energy storage valve.

It should be noted that in a more detailed embodiment, after the energy storage valve has completed insertion, to achieve subsequent operation control of the energy storage valve, the control apparatus also switches the control mode of the energy storage valve and the VSC valve. For example, switching to control the energy storage valve in the constant voltage control mode, selected based on actual needs.

In the above solution, when there is a need to put the energy storage valve into operation, the energy storage valve submodule of the energy storage valve is first controlled to power on, and after the energy storage valve submodule completes powering on, the first terminal of the energy storage valve is controlled to connect to the grid bus. Subsequently, the branch voltage of the energy storage valve is acquired in real-time and analyzed. When the branch voltage satisfies the preset voltage condition, the second terminal of the energy storage valve is controlled to connect to the grid bus, completing the insertion control of the energy storage valve. In this solution, the branch voltage of the energy storage valve can be obtained in real-time and analyzed during the insertion process of the energy storage valve, and in a case that the branch voltage satisfies the preset voltage condition, the energy storage valve is fully connected to the grid bus. This can reduce the impact on the grid when the energy storage valve is inserted, improving the insertion reliability of the energy storage valve, thereby further enhancing the operational reliability of the energy storage system.

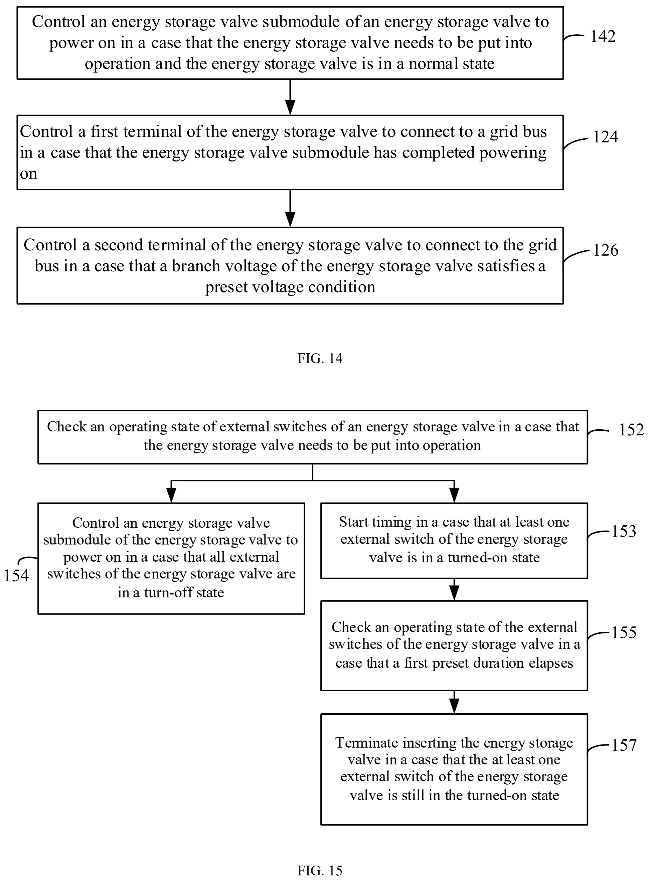

Referring to FIG. 14, in some embodiments, step 122 includes step 142:
Step 142: Control an energy storage valve submodule of the energy storage valve to power on in a case that the energy storage valve needs to be put into operation and the energy storage valve is in a normal state.

Specifically, in the solution of this embodiment, when it is detected that the energy storage valve needs to be put into operation, it further needs to verify whether the energy storage valve is in a normal state in this case. When it is determined that the energy storage valve is in a normal state, the energy storage valve submodule of the energy storage valve is further controlled to power on.

It should be noted that in some embodiments, if it is detected that the energy storage valve is not in a normal state, the insertion operation of the energy storage valve is interrupted, and an alarm prompt is output to inform the user, thereby achieving insertion control under the normal state of the energy storage valve and improving insertion reliability.

In the above solution, before controlling the energy storage submodule to power on, it further needs to check whether the energy storage valve is in a normal state. Insertion control of the energy storage valve is initiated in a case that the energy storage valve is in a normal state, effectively improving the reliability of performing the insertion operation.

In some embodiments, a manner of determining that the energy storage valve is in a normal state includes: performing a self-check on an energy storage system to which the energy storage valve belongs; and determining that the energy storage valve is in a normal state in a case that the energy storage system passes the self-check and the energy storage valve is in a locked state.

Specifically, the energy storage system to which the energy storage valve belongs is an energy storage system to which the energy storage valve to be put into operation is correspondingly intended to connect. To ensure that the energy storage valve can operate safely and reliably after insertion, it is first necessary to ensure that the energy storage system into which the energy storage valve is to be inserted is an energy storage system operating normally. Therefore, in the solution of this embodiment, a self-check of the energy storage system is required, and the insertion operation of the energy storage valve is further performed in a case that the energy storage valve passes the self-check, that is, the self-check confirms that the energy storage valve has no abnormalities.

It should be noted that the method for performing the self-check of the energy storage system is not unique. In some embodiments, it may involve the control apparatus communicating with the components to be self-checked or acquiring the operating state parameters of the components to be self-checked, then comparing them with predefined parameters characterizing normal operation to determine whether the components to be self-checked are normal.

In the solution of this embodiment, after the energy storage system passes the self-check, the state of the energy storage valve itself is further checked to determine whether the energy storage valve is currently in a locked state. Ultimately, when the energy storage valve is in a locked state, the energy storage valve is determined to be in a normal state. It can be understood that in other embodiments, when it is detected that the energy storage valve is in a locked state, a signal indicating that the energy storage valve is normal is also output. More specifically, the control apparatus sends the signal indicating that the energy storage valve is normal to the backend device of the energy storage system, so that the backend device can determine whether to initiate insertion control.

If the energy storage valve is not in a locked state, there is no need to perform insertion control of the energy storage valve. The control apparatus sends a prompt signal to the backend device. At this point, the backend device determines that the energy storage valve is not in a normal state, sending an interrupt signal to the control apparatus to interrupt putting into operation the energy storage valve and switching to a maintenance state to perform maintenance on the energy storage valve.

In the above solution, in a case that the energy storage system reports a normal self-check and the energy storage valve itself is locked, the energy storage valve is determined to be in a normal state, offering high judgment accuracy.

In some embodiments, the self-check of the energy storage system includes at least one of: an energy storage valve control and protection system self-check, a power module self-check, a valve cooling system self-check, a battery management system self-check, a battery status self-check, and a main control box and fire protection self-check.

Specifically, the energy storage valve is a part of the energy storage system, and the self-check of the energy storage system includes self-checks of the energy storage valve, battery system, and the like. Specifically, the self-check of the energy storage valve includes an energy storage valve control and protection system self-check, a power module self-check, and a valve cooling system self-check. The control and protection system is used in the energy storage valve to control the switching and protection of the energy storage valve, and the control and protection system self-check involves checking whether the relevant components in the control system and protection system are normal. The power module self-check involves checking whether the power modules of each energy storage valve submodule in the energy storage valve are operating normally. The valve cooling system self-check involves checking whether the relevant components in the cooling system of the energy storage valve are operating normally. The battery system self-check further includes a battery management system self-check, a battery status self-check, a main control box self-check, and a fire protection self-check. The battery management system self-check involves checking whether the battery management system (Battery Management System, BMS) is operating normally. The battery status self-check involves checking whether the battery used for energy storage in the energy storage module of the energy storage valve submodule is operating normally. The main control box and fire protection self-check involve checking whether the relevant components in the system used for main control and fire protection of the energy storage valve submodule are operating normally.

In the solution of this embodiment, when performing a self-check of the energy storage system, one or more of the energy storage valve control and protection system, power module, valve cooling system, battery management system, battery status, main control box, and fire protection can be self-checked based on actual needs.

**In** the above solution, the self-check schemes for the energy storage system are diversified, and in practical scenarios, at least one scheme can be selected based on actual needs, effectively improving self-check reliability.

Referring to FIG. 15, in some embodiments, step 122 includes step 152 and step 154:
Step 152: Check an operating state of external switches of the energy storage valve in a case that the energy storage valve needs to be put into operation.
Step 154: Control the energy storage valve submodule of the energy storage valve to power on in a case that all external switches of the energy storage valve are in a turn-off state.

Specifically, the external switches of the energy storage valve refer to the switch components in the connection line between the energy storage valve and the grid. The turn-off state is the disconnected state. In the solution of this embodiment, when it is detected that the energy storage valve needs to be inserted, whether all switch components in the connection line between the energy storage valve and the grid are in a turn-off state needs to be further checked. When all external switches of the energy storage valve are in the off state, the corresponding insertion operation is initiated.

It can be understood that in a more detailed embodiment, the operating state of the external switches of the energy storage valve is checked after detecting that the energy storage valve is in a normal state. That is, in the solution of this embodiment, when it is detected that the energy storage valve needs to be put into operation, a self-check of the energy storage system is first performed, and whether the energy storage valve is in a locked state is checked. After the energy storage system passes the self-check and the energy storage valve is in a locked state, whether all external switches of the energy storage valve are in a turn-off state is further checked. Ultimately, when it is detected that all external switches of the energy storage valve are in a turn-off state, the energy storage valve submodule of the energy storage valve is controlled to power on.

It can be understood that the method for controlling the energy storage valve submodule to power on is not unique. In some embodiments, it may involve the control apparatus directly initiating power-on control upon detecting that all external switches of the energy storage valve are in a turn-off state. In other embodiments, it may involve the control apparatus feeding back a related signal to the backend device upon detecting that all external switches of the energy storage valve are in a turn-off state, then performing the power-on control of the energy storage valve submodule based on a power-on command issued by the backend device.

It should be noted that the specific type of external switches of the energy storage valve is not unique. In a more detailed embodiment, the external switches of the energy storage valve include at least one of a fast switch, an isolating switch, and a grounding switch.

In the above solution, before powering on the energy storage valve submodule, there is a need to perform detection for the state of the external switches of the energy storage valve, and inserting the energy storage valve is performed when all external switches of the energy storage valve are in a turn-off state, ensuring a safe and controllable insertion process.

Referring to FIG. 15, in some embodiments, after step 152, the method further includes step 153, step 155, and step 157:
Step 153: Start timing in a case that at least one external switch of the energy storage valve is in a turned-on state.
Step 155: Check an operating state of the external switches of the energy storage valve when a first preset duration elapses.
Step 157: Terminate inserting the energy storage valve in a case that the at least one external switch of the energy storage valve is still in the turned-on state.

Specifically, when the control apparatus detects the operating state of the external switches of the energy storage valve, there may be cases where an external switch of the energy storage valve is not turned off. To improve the insertion reliability of the energy storage valve in this case, timing of the first preset duration is started, and after the first preset duration elapses, the operating state of the external switches of the energy storage valve is checked again. If the external switch that is not turned off of the energy storage valve is still in the turned-on state, the insertion control of the energy storage valve is terminated. If the external switch that is not turned off of the energy storage valve is now in a turn-off state, that is, in a case that there are no external switches of the energy storage valve in a turned-on state, the control apparatus controls the energy storage valve to perform the insertion operation, controlling the energy storage valve submodule to power on.

In the above solution, in a case that an external switch of the energy storage valve is turned on, the first preset duration is set to wait for a change in the state of the external switch of the energy storage valve, enabling timely insertion when the state of the external switch of the energy storage valve changes, further improving the insertion reliability.

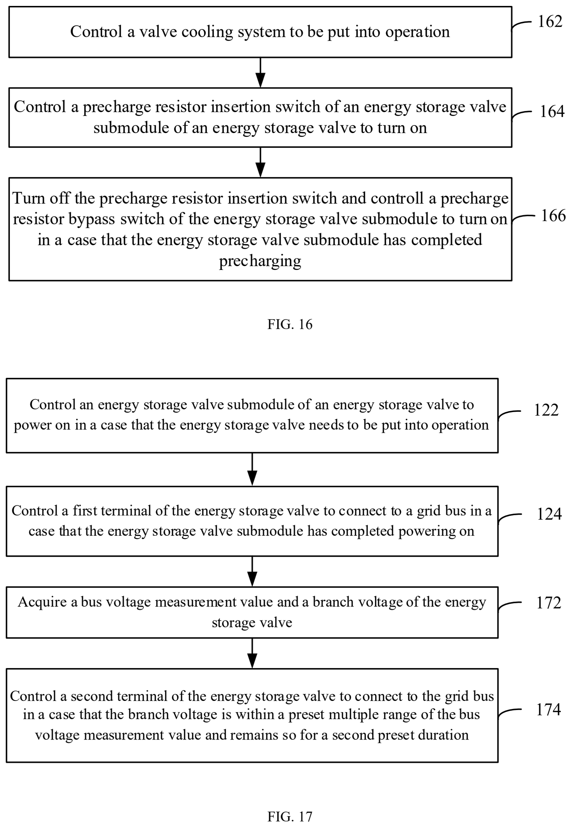

Referring to FIG. 16, in some embodiments, the controlling an energy storage valve submodule of the energy storage valve to power on includes step 162, step 164, and step 166:
Step 162: Control a valve cooling system to be put into operation.
Step 164: Control a precharge resistor insertion switch of the energy storage valve submodule of the energy storage valve to turn on.
Step 166: Turn off the precharge resistor insertion switch and control a precharge resistor bypass switch of the energy storage valve submodule to turn on in a case that the energy storage valve submodule has completed precharging.

Specifically, in the solution of this embodiment, when powering on the energy storage valve submodule, the control apparatus first sends an insertion control signal to the valve cooling system, causing the valve cooling system to start and enter operation in the energy storage system. The structure of the energy storage valve submodule, reference can be made to FIG. 5. To improve the safety and reliability of powering on the energy storage valve submodule, in the solution of this embodiment, the precharge resistor insertion switch K1 is first controlled to turn on, after which the battery S charges the capacitor C of the power module 402 through the precharge resistor R1. When precharging is complete, the control apparatus controls the precharge resistor insertion switch K1 to turn off and controls the precharge resistor bypass switch K2 to turn on, allowing the battery S to charge the capacitor C through the precharge resistor bypass switch K2 until the power-on operation of the energy storage valve submodule is completed.

In the above solution, before powering on the energy storage valve submodule, the valve cooling system needs to be put into operation, followed by initiating precharging and then normal charging. This can effectively improve the safety of powering on the energy storage valve submodule.

It should be noted that the method for determining whether precharging is complete is not unique. In some embodiments, determining that the energy storage valve submodule has completed precharging includes: acquiring a capacitor voltage of a power module of the energy storage valve submodule; and in a case that a difference between a battery voltage of an energy storage module in the energy storage valve submodule and the capacitor voltage is less than a preset voltage threshold, determining that the energy storage valve submodule has completed precharging.

Specifically, in the solution of this embodiment, a preset voltage threshold is pre-stored in the control apparatus. During the power-on process of the energy storage valve submodule, the voltage across the capacitor of the power module, that is, the capacitor voltage, can be acquired in real-time. Simultaneously, the voltage across the battery of the energy storage module (which can be obtained through communication with the battery management system), that is, the battery voltage, can also be acquired. The difference between the battery voltage and the capacitor voltage is then calculated and compared with the preset voltage threshold. When the capacitor charging causes the difference to be less than the preset voltage threshold, it is determined that the energy storage valve submodule has completed precharging. At this point, the precharge resistor insertion switch of the energy storage valve submodule is turned off, and the precharge resistor bypass switch is turned on to perform normal charging of the capacitor until the power-on operation is finally completed.

In the above solution, in a case that the difference between the capacitor voltage of the power module and the battery voltage of the energy storage module is less than the preset voltage threshold, precharging is considered complete, effectively reducing current impact on a battery during power-on and extending the battery lifespan.

In some embodiments, the controlling a first terminal of the energy storage valve to connect to a grid bus includes: controlling a first fast switch and a first isolating switch between the first terminal of the energy storage valve and the grid bus to turn on.

Specifically, a first fast switch and a first isolating switch are provided between the first terminal of the energy storage valve and the grid bus. Referring to FIG. 13, the first terminal of the energy storage valve 104 is connected to the first fast switch 134, the first fast switch 134 is connected to the first isolating switch 131, and the first isolating switch 131 is connected to the grid bus, specifically the negative grid bus. Therefore, in the solution of this embodiment, controlling the first terminal of the energy storage valve 104 to connect to the grid bus only requires turning on the first isolating switch 131 and the first fast switch 134.

More specifically, in other embodiments, to improve the operational safety and reliability of the first fast switch 134 and the first isolating switch 131, the first fast switch 134 and the first isolating switch 131 are also respectively grounded through grounding switches 106. Thus, in the solution of this embodiment, not only are the first fast switch 134 and the first isolating switch 131 controlled to turn on, but the two grounding switches 106 are also controlled to turn on.

It should be noted that in other embodiments, controlling the first terminal of the energy storage valve to connect to the grid bus can be achieved through other methods, selected based on the connection relationship between the energy storage valve and the grid bus in actual scenarios. For example, in other embodiments, the energy storage valve is directly connected to the grid bus through an isolating switch, and in this case, only the isolating switch needs to be turned on to connect the first terminal of the energy storage valve to the grid bus.

It can be understood that, similar to the power-on control of the energy storage valve submodule described above, in some embodiments, the control apparatus may directly control the first fast switch and the first isolating switch between the first terminal of the energy storage valve and the grid bus to turn on upon detecting that the energy storage valve submodule has completed powering on. In other embodiments, the control apparatus may feed back a related signal to the backend device upon detecting that the energy storage valve submodule has completed powering on, and then perform controlled connection of the first terminal of the energy storage valve to the grid bus under the control of an insertion command issued by the backend device.

**In** the above solution, controlled connection between the first terminal of the energy storage valve to the grid bus is achieved by turning on the first fast switch and the first isolating switch. This offers fast response speed and high connection efficiency.

Referring to FIG. 17, in some embodiments, step 126 includes step 172 and step 174:
Step 172: Acquire a bus voltage measurement value and the branch voltage of the energy storage valve.
Step 174: Control the second terminal of the energy storage valve to connect to the grid bus in a case that the branch voltage is within a preset multiple range of the bus voltage measurement value and remains so for a second preset duration.

Specifically, the bus voltage measurement value is the actual measured voltage value between the positive grid bus and the negative grid bus. In the solution of this embodiment, after the first terminal of the energy storage valve is connected to the grid, establishing a voltage reference value, the control apparatus monitors the bus voltage measurement value and the branch voltage. When the branch voltage is within a preset multiple range of the bus voltage measurement value and remains so for a second preset duration, it is considered that the branch voltage satisfies the preset voltage condition, and the connection operation of the second terminal of the energy storage valve is performed.

It should be noted that the size of the preset multiple range is not unique. In a more detailed embodiment, the preset multiple range is set to 0.98-1.02, that is, when the branch voltage reaches 0.98-1.02 times the bus voltage measurement value and remains so within this range for the second preset duration, the branch voltage is considered to satisfy the preset voltage condition.

It can be understood that in other embodiments, the preset multiple range may be set to other values, such as 0.95-1.05, without specific limitation. The size of the second preset duration is also not unique, may be greater than, less than, or equal to the first preset duration, and may be specifically set based on actual scenarios.

In the above solution, controlled connection of the second terminal of the energy storage valve is performed based on the relationship between the real-time acquired branch voltage and the bus voltage measurement value, mitigating the impact of the second terminal connection on the bus voltage, thereby reducing the impact of the second terminal connection of the energy storage valve on the grid bus and improving the success rate of insertion.

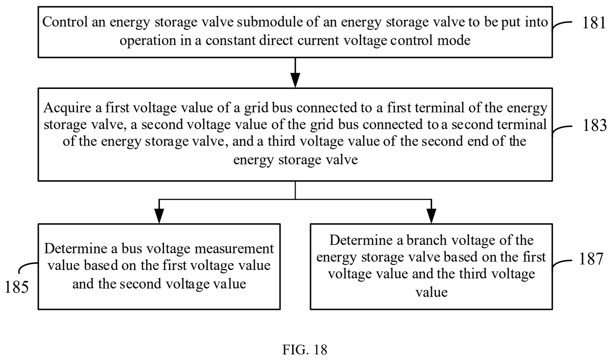

Referring to FIG. 18, in some embodiments, step 172 includes step 181, step 183, step 185, and step 187.
Step 181: Control the energy storage valve submodule of the energy storage valve to be put into operation in a constant direct current voltage control mode.
Step 183: Acquire a first voltage value of the grid bus connected to the first terminal of the energy storage valve, a second voltage value of the grid bus connected to the second terminal of the energy storage valve, and a third voltage value of the second terminal of the energy storage valve.
Step 185: Determine the bus voltage measurement value based on the first voltage value and the second voltage value.
Step 187: Determine a branch voltage of the energy storage valve based on the first voltage value and the third voltage value.

Specifically, the constant direct current voltage control mode refers to a control method in which, when the direct current voltage deviates, regulation is performed to return the direct current voltage to a fixed reference direct current voltage, ultimately maintaining the direct current voltage at the fixed reference direct current voltage. The first voltage value of the grid bus connected to the first terminal of the energy storage valve is the voltage measurement value on the negative grid bus. The second voltage value of the grid bus connected to the second terminal of the energy storage valve is the voltage measurement value on the positive grid bus. The third voltage value of the second terminal of the energy storage valve is the voltage measurement value on the connection line between the second terminal of the energy storage valve and the grid bus.

In the solution of this embodiment, the energy storage valve is regulated in the constant direct current voltage control mode, controlling the switching of the energy storage valve submodules based on actual needs. During this process, the control apparatus acquires the first voltage value, the second voltage value, and the third voltage measurement value in real-time, and through further calculation, determines the branch voltage and the bus voltage measurement value.

More specifically, in some embodiments, the bus voltage measurement value U = ∥Vdc+| + |Vdc-∥, where Vdc+ represents the second voltage value, and Vdc- represents the first voltage value. The branch voltage u = ∥U3| + |Vdc-∥, where U3 represents the third voltage measurement value.

The manner for acquiring the first voltage measurement value, the second voltage measurement value, and the third voltage measurement value is not unique. Referring to FIG. 13, in the solution of this embodiment, voltage detectors 505 are provided on the positive grid bus, the negative grid bus, and the second terminal of the energy storage valve, respectively, to acquire the first voltage value, the second voltage value, and the third voltage value in real-time and send them to the control apparatus. It can be understood that the type of voltage detector 505 is not unique. For example, in a more detailed embodiment, the voltage detector 505 is a voltage transformer.

In the above solution, the bus voltage measurement value and the branch voltage are calculated based on the actually collected voltage values, improving the accuracy of the bus voltage measurement value and the branch voltage.

In some embodiments, the controlling a second terminal of the energy storage valve to connect to the grid bus includes: controlling a second fast switch and a second isolating switch between the second terminal of the energy storage valve and the grid bus to turn on.

Specifically, a second fast switch and a second isolating switch are provided between the second terminal of the energy storage valve and the grid bus. Referring to FIG. 13, the second terminal of the energy storage valve 104 is connected to the second fast switch 133, the second fast switch 133 is connected to the second isolating switch 132, and the second isolating switch 132 is connected to the grid bus, specifically the positive grid bus. Therefore, in the solution of this embodiment, controlling the second terminal of the energy storage valve 104 to connect to the grid bus only requires turning on the second isolating switch 132 and the second fast switch 133.

In the above solution, controlled connection of the second terminal of the energy storage valve to the grid bus is achieved by turning on the second fast switch and the second isolating switch. This offers fast response speed and high connection efficiency.

To facilitate understanding of the technical solutions of the present application, the following provides a more detailed embodiment to explain the present application.

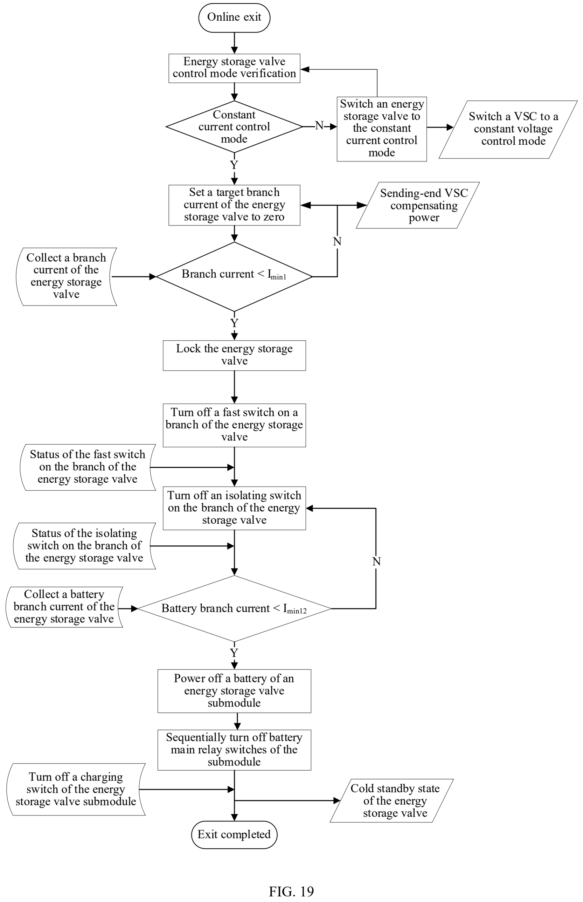

Referring to FIG. 19, first, when it is detected that the energy storage valve needs to exit operation due to maintenance or other reasons, a current control mode of an energy storage valve that needs to exits operation is verified. If the control mode is a constant voltage control mode, it is switched to a constant current control mode. In the constant current control mode, the target branch current value of the energy storage valve is updated to zero, that is, the fixed reference current value of the constant current control mode is set to zero. Subsequently, switching of the energy storage valve submodules in the energy storage valve is controlled to allow the branch current of the energy storage valve to be gradually reduced at a preset speed.

Each time the branch current of the energy storage valve is reduced, the power variation of the energy storage valve at that moment can be calculated based on the change in the branch current and the voltage of the energy storage valve. If the energy storage valve outputs power at this moment, the obtained power variation is the emitted power amount. If the energy storage valve absorbs power at this moment, the obtained power variation is the absorbed power amount. The control apparatus transmits the emitted power amount or the absorbed power amount to the sending-end voltage source converter valve, and the sending-end voltage source converter valve performs voltage outer loop and current inner loop control to correspondingly increase or decrease the output power, maintaining the output power at a constant value.

In addition, during this process, the control apparatus compares and analyzes the real-time branch current with the preset turn-off impact current. When the branch current is less than the preset turn-off impact current (Iₘᵢₙ₁), the fast switch between the first terminal of the energy storage valve and the positive grid bus, and the fast switch between the second terminal of the energy storage valve and the negative grid bus are turned off. Based on the acquired switch status analysis, when both fast switches are in a turn-off state, the isolating switch between the first terminal of the energy storage valve and the positive grid bus, and the isolating switch between the second terminal of the energy storage valve and the negative grid bus are controlled to turn off, completing the disconnection of the energy storage valve.

Subsequently, for each energy storage valve submodule, the control apparatus acquires its battery branch current and compares it with a preset power-off current (Iₘᵢₙ₁₂). When the battery branch current is less than the preset power-off current, the charging switches in the energy storage module of the energy storage valve submodule, that is, the precharge resistor bypass switch and the precharge resistor insertion switch, are turned off, completing the power-off of the energy storage valve submodule. Finally, the control apparatus controls the energy storage valve to enter a cold standby state, completing the exit operation of the energy storage valve.

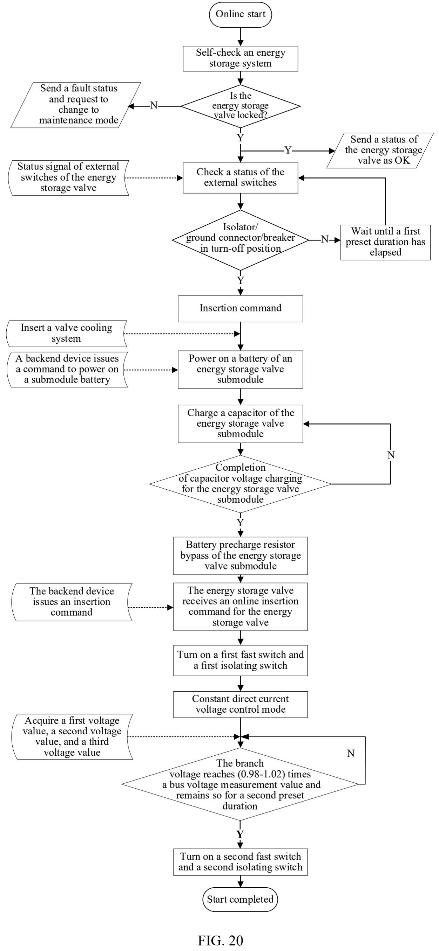

Referring to FIG. 20, when the control apparatus detects a need to put the energy storage valve into operation in the energy storage system, a self-check of the energy storage system to be inserted is first performed. Specifically, an energy storage valve control and protection system self-check, a power module self-check, a valve cooling system self-check, a battery management system self-check, a battery status self-check, and a main control box and fire protection self-check are performed on the energy storage system. When all self-checks are passed, it is determined whether the energy storage valve is currently in a locked state, specifically by analyzing signals such as function codes related to the operating state of the energy storage valve. If the energy storage valve is detected to be in a locked state, a signal indicating that the energy storage valve is normal is sent to the backend device, and then the status signals of the external switches of the energy storage valve are acquired.

If it is analyzed through the status signals that all external switches of the energy storage valve are in a turn-off state, this status is fed back to the backend device. Subsequently, based on the insertion command fed back by the backend device, the valve cooling system is controlled to be put into operation, and the precharge resistor insertion switch in the energy storage valve submodule is controlled to turn on, initiating precharging. This process is analyzed based on the real-time acquired capacitor voltage. When the difference between the battery voltage and the capacitor voltage is less than a preset voltage threshold, it is determined that the energy storage valve submodule has completed precharging. At this point, the precharge resistor insertion switch is turned off, and the precharge resistor bypass switch is controlled to turn on, completing the power-on of the energy storage valve submodule.

If the status signals indicate that the external switches of the energy storage valve are in a turned-on state, timing of the first preset duration is started. After duration elapses, the status signals are reacquired for analysis. If there are still external switches of the energy storage valve in a turned-on state, the insertion control is terminated, and an alarm prompt signal is output. If no external switches of the energy storage valve are in a turned-on state, the energy storage valve submodule is controlled to power on.

After all energy storage valve submodules have completed powering on, the control apparatus feeds back this status to the backend device. Subsequently, under the insertion command issued by the backend device, the first fast switch and the first isolating switch between the first terminal of the energy storage valve and the negative grid bus are controlled to turn on, establishing a reference voltage benchmark Vdc-.

Subsequently, the control apparatus acquires in real-time the first voltage value of the negative grid bus, the second voltage value of the positive grid bus, and the third voltage value of the second terminal of the energy storage valve. The bus voltage measurement value is calculated as U = ∥Vdc+| + |Vdc-∥, and the branch voltage is calculated as u = ∥U3| + |Vdc-∥. When the branch voltage reaches 0.98-1.02 times the bus voltage measurement value and remains so for a second preset duration, the control apparatus sends this status to the backend device. Finally, based on the insertion command sent by the backend device, the second fast switch and the second isolating switch between the second terminal of the energy storage valve and the positive grid bus are controlled to turn on, completing the insertion control of the energy storage valve. Based on actual needs, after the energy storage valve has completed insertion, the control mode of the energy storage valve or the VSC valve is switched, concluding the entire insertion process.

It should be understood that, although the steps in the flowcharts mentioned in the above embodiments are shown sequentially as indicated by arrows, these steps are not necessarily performed in the order indicated by the arrows. Unless explicitly stated herein, the execution of these steps is not strictly limited in order, and these steps may be performed in other orders. Moreover, at least some of the steps in the flowcharts mentioned in the above embodiments may include multiple steps or multiple stages. These steps or stages are not necessarily performed at the same time but may be performed at different times. The order of execution of these steps or stages is not necessarily sequential but may be performed alternately or interleavedly with other steps or at least a portion of the steps or stages in other steps.

Based on the same inventive concept, an embodiment of the present application also provides an energy storage valve operation control apparatus for implementing the energy storage valve operation control method described above. The solutions provided by the apparatus for solving problems are similar to those described in the method above. Therefore, the specific limitations in one or more embodiments of the energy storage valve operation control apparatus provided below can be referred to the limitations of the energy storage valve operation control method above, and are not repeated here.

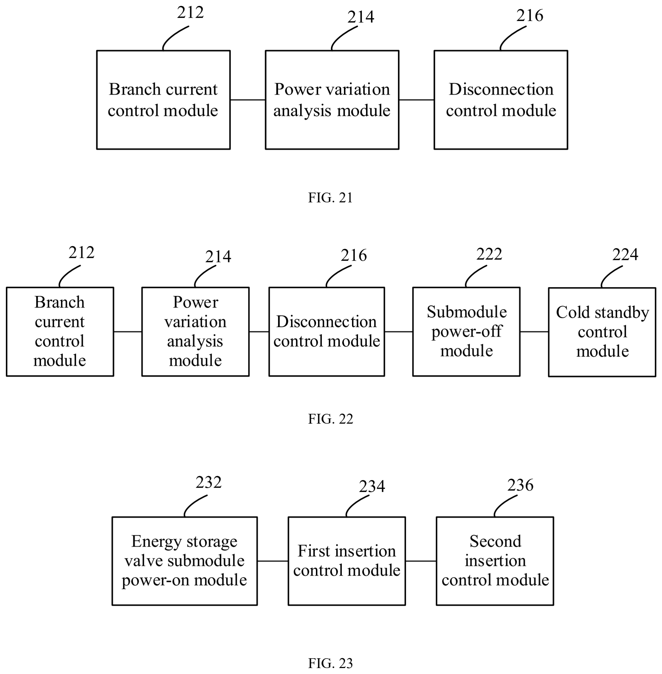

Referring to FIG. 21, the present application provides an energy storage valve operation control apparatus, including: a branch current control module 212, a power variation analysis module 214, and a disconnection control module 216.

The branch current control module 212 is configured to gradually reduce a branch current of an energy storage valve in a case that the energy storage valve needs to exit operation; the power variation analysis module 214 is configured to acquire a power variation of the energy storage valve and send it to a sending-end voltage source converter valve. The disconnection control module 216 is configured to disconnect the energy storage valve from a grid in a case that the branch current satisfies a preset current condition.

In some embodiments, the branch current control module 212 is further configured to gradually reduce the branch current of the energy storage valve in a case that the energy storage valve needs to exit operation and the energy storage valve is in a constant current control mode.

In some embodiments, the branch current control module 212 is further configured to switch the energy storage valve to a constant current control mode in a case that the energy storage valve needs to exit operation and the energy storage valve is in a constant voltage control mode; and to gradually reduce the branch current of the energy storage valve in a case that the energy storage valve is in the constant current control mode.

In some embodiments, the branch current control module 212 is further configured to set a target branch current of the energy storage valve to zero and reduce the branch current of the energy storage valve at a preset speed.

In some embodiments, the power variation analysis module 214 is further configured to acquire a current variation of the energy storage valve; determine an emitted power amount of the energy storage valve based on the current variation and a voltage value of the energy storage valve; or determine an absorbed power amount of the energy storage valve based on the current variation and the voltage value of the energy storage valve.

In some embodiments, the disconnection control module 216 is further configured to control a fast switch between the energy storage valve and the grid to turn off in a case that the branch current is less than a preset turn-off impact current; and to control an isolating switch between the energy storage valve and the grid to turn off in a case that the fast switch is turned off.

Referring to FIG. 22, in some embodiments, the apparatus further includes a submodule power-off module 222.

The submodule power-off module 222 is configured to control an energy storage valve submodule to power off in a case that a battery branch current of the energy storage valve submodule in the energy storage valve is less than a preset power-off current.

In some embodiments, the submodule power-off module 222 is further configured to turn off a charging switch of an energy storage module in the energy storage valve submodule.

Referring to FIG. 22, in some embodiments, the apparatus further includes a cold standby control module 224. The cold standby control module 224 is configured to control the energy storage valve to enter a cold standby state.

Referring to FIG. 23, in some embodiments, the energy storage valve operation control apparatus further includes: an energy storage valve submodule power-on module 232, a first insertion control module 234, and a second insertion control module 236.

The energy storage valve submodule power-on module 232 is configured to control an energy storage valve submodule of the energy storage valve to power on in a case that the energy storage valve needs to be put into operation; the first insertion control module 234 is configured to control a first terminal of the energy storage valve to connect to a grid bus in a case that the energy storage valve submodule has completed powering on; the second insertion control module 236 is configured to control a second terminal of the energy storage valve to connect to the grid bus in a case that a branch voltage of the energy storage valve satisfies a preset voltage condition.

In some embodiments, the energy storage valve submodule power-on module 232 is further configured to control the energy storage valve submodule of the energy storage valve to power on in a case that the energy storage valve needs to be put into operation and the energy storage valve is in a normal state.

In some embodiments, the energy storage valve submodule power-on module 232 is further configured to perform a self-check on an energy storage system to which the energy storage valve belongs; and to determine that the energy storage valve is in a normal state in a case that the energy storage system passes the self-check and the energy storage valve is in a locked state.

In some embodiments, the energy storage valve submodule power-on module 232 is further configured to check an operating state of external switches of the energy storage valve in a case that the energy storage valve needs to be put into operation; and to control the energy storage valve submodule of the energy storage valve to power on in a case that all external switches of the energy storage valve are in a turn-off state.

In some embodiments, the energy storage valve submodule power-on module 232 is further configured to start timing in a case that at least one external switch of the energy storage valve is in a turned-on state; to check the operating state of the external switches of the energy storage valve when a first preset duration elapses; and to terminate putting into operation the energy storage valve in a case that at least one external switch of the energy storage valve is still in the turned-on state.

In some embodiments, the energy storage valve submodule power-on module 232 is further configured to control a valve cooling system to be put into operation; to control a precharge resistor insertion switch of the energy storage valve submodule of the energy storage valve to turn on; and to turn off the precharge resistor insertion switch and control a precharge resistor bypass switch of the energy storage valve submodule to turn on in a case that the energy storage valve submodule has completed precharging.

In some embodiments, the first insertion control module 234 is further configured to acquire a capacitor voltage of a power module of the energy storage valve submodule; and to determine that the energy storage valve submodule has completed precharging in a case that a difference between a battery voltage of an energy storage module in the energy storage valve submodule and the capacitor voltage is less than a preset voltage threshold.

In some embodiments, the first insertion control module 234 is further configured to control a first fast switch and a first isolating switch between the first terminal of the energy storage valve and the grid bus to turn on.

In some embodiments, the second insertion control module 236 is further configured to acquire a bus voltage measurement value and a branch voltage of the energy storage valve; and to control the second terminal of the energy storage valve to connect to the grid bus in a case that the branch voltage is within a preset multiple range of the bus voltage measurement value and remains so for a second preset duration.

In some embodiments, the second insertion control module 236 is further configured to control an energy storage valve submodule of the energy storage valve to be put into operation in a constant direct current voltage control mode; to acquire a first voltage value of a grid bus connected to a first terminal of the energy storage valve, a second voltage value of a grid bus connected to a second terminal of the energy storage valve, and a third voltage value of the second terminal of the energy storage valve; to determine a bus voltage measurement value based on the first voltage value and the second voltage value; and to determine a branch voltage of the energy storage valve based on the first voltage value and the third voltage value.

In some embodiments, the second insertion control module 236 is further configured to control a second fast switch and a second isolating switch between the second terminal of the energy storage valve and the grid bus to turn on.

Each module in the above energy storage valve operation control apparatus may be implemented wholly or partially through software, hardware, or a combination thereof. The above modules may be embedded in or independent of a processor in a computer device in hardware form, or stored in a memory in a computer device in software form, so that the processor can call and execute the operations corresponding to the above modules.

The above energy storage valve operation control apparatus, while reducing the branch current of the energy storage valve, adjusts the output power of the sending-end voltage source converter valve in combination with the power variation of the energy storage valve, maintaining stable power in the transmission line, reducing the impact on the VSC valves at two ends when the energy storage valve exits operation, and improving the exit reliability of the energy storage valve. During the insertion process of the energy storage valve, it enables real-time analysis of the branch voltage of the energy storage valve. In a case that the branch voltage satisfies the preset voltage condition, the energy storage valve is fully connected to the grid bus, reducing the impact on the grid during insertion of the energy storage valve and improving the insertion reliability of the energy storage valve.

Referring to FIG. 1, the present application also provides an energy storage system, including: a fast switch 105, a sending-end voltage source converter valve 102, a receiving-end voltage source converter valve 103, an energy storage valve 104, an isolating switch 101, and a control apparatus (not shown). The sending-end voltage source converter valve 102 has two ends respectively connected to a grid bus; the receiving-end voltage source converter valve 103 has two ends respectively connected to the grid bus; the energy storage valve 104 is connected to the fast switch 105; the isolating switch 101 is connected to the fast switch 105 and the grid bus; the control apparatus is respectively connected to the sending-end voltage source converter valve 102, the receiving-end voltage source converter valve 103, the fast switch 105, the isolating switch 101, and the energy storage valve 104, and is configured to execute the energy storage valve operation control method described above.

Specifically, the solutions provided by the energy storage system for solving problems are similar to those described in the method above. Therefore, the specific limitations of the energy storage system can be referred to the limitations of the energy storage valve operation control method above, and are not repeated here. In a case that the energy storage valve 104 needs to exit operation, the energy storage system gradually controls the branch current of the energy storage valve 104 to reduce, and during this process, acquires the power variation of the energy storage valve 104 in real-time and sends the acquired power variation to the sending-end voltage source converter valve 102, enabling the sending-end voltage source converter valve 102 to adjust its output power based on the power variation of the energy storage valve 104, thereby maintaining stable output power of the sending-end voltage source converter valve 102. Ultimately, when the branch current decreases to satisfy a preset current condition, the energy storage valve 104 is disconnected from the grid. This solution, while reducing the branch current of the energy storage valve 104, adjusts the output power of the sending-end voltage source converter valve 102 in combination with the power variation of the energy storage valve 104, maintaining stable power in the transmission line, reducing the impact on the VSC valves at two ends when the energy storage valve 104 exits operation, and improving the exit reliability of the energy storage valve 104.

Referring to FIG. 13, in some embodiments, the isolating switch 101 includes a first isolating switch and a second isolating switch, and the fast switch 105 includes a first fast switch and a second fast switch. That is, the energy storage system includes an energy storage valve, a first fast switch, a first isolating switch, a second fast switch, a second isolating switch, and a control apparatus. The first fast switch is connected to a first terminal of the energy storage valve and the first isolating switch; the first isolating switch is connected to the grid bus; the second fast switch is connected to a second terminal of the energy storage valve and the second isolating switch; the second isolating switch is connected to the grid bus; the control apparatus is respectively connected to the energy storage valve, the first fast switch, the first isolating switch, the second fast switch, and the second isolating switch, and is configured to execute the energy storage valve operation control method described above.

Specifically, the solutions provided by the energy storage system for solving problems are similar to those described in the method above. Therefore, the specific limitations of the energy storage system can be referred to the limitations of the energy storage valve operation control method above, and are not repeated here. In a case that there is a need to put the energy storage valve into operation, this energy storage system first controls the energy storage valve submodules of the energy storage valve to power on. In a case that the energy storage valve submodule has completed powering on, controls the first terminal of the energy storage valve to connect to the grid bus. Subsequently, it acquires and analyzes the branch voltage of the energy storage valve in real-time, and when the branch voltage satisfies a preset voltage condition, controls the second terminal of the energy storage valve to connect to the grid bus, completing the insertion control of the energy storage valve. This solution can allow for real-time acquiring and analysis of the branch voltage of the energy storage valve during the insertion process of the energy storage valve. In a case that the branch voltage satisfies the preset voltage condition, the energy storage valve is fully connected to the grid bus, reducing the impact on the grid during insertion of the energy storage valve and improving the insertion reliability of the energy storage valve.

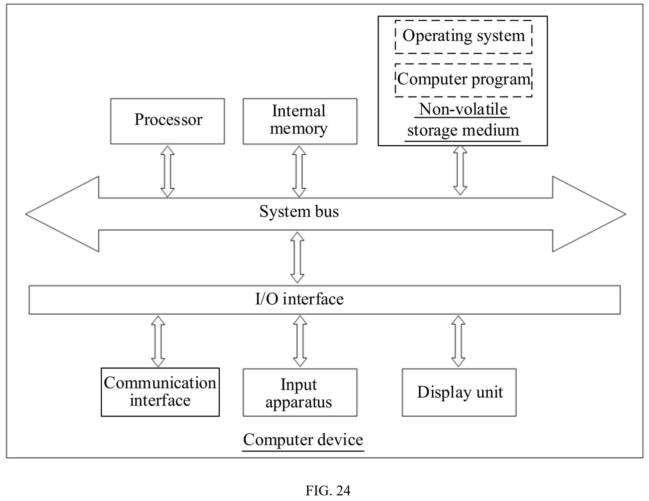

**In** some embodiments, a computer device is provided. The computer device may be a terminal whose internal structure may be illustrated in FIG. 24. The computer device includes a processor, a memory, a communication interface, a display, and an input apparatus that are connected via a system bus. The processor of the computer device is configured to provide computing and control capabilities. Memories of the computer device include a non-volatile storage medium and an internal memory. The non-volatile storage medium stores an operating system and a computer program. The internal memory provides an environment for the operation of the operating system and computer program in the non-volatile storage medium. The communication interface of the computer device is configured to communicate with an external terminal in a wired or wireless manner. The wireless manner can be implemented through Wi-Fi, a mobile cellular network, NFC (near field communication), or other technologies. When the computer program is executed by the processor, the energy storage valve operation control method is implemented. The display of the computer device may be a liquid crystal display or an electronic ink display. The input apparatus of the computer device may be a touch layer overlaid on the display, or a button, trackball, or trackpad provided on a housing of the computer device, or an external keyboard, trackpad, mouse, or the like.

Those skilled in the art can understand that the structure shown in FIG. 24 is only a block diagram of a partial structure related to the solution of the present application and does not constitute a limitation on the computer device on which the solution of the present application is applied. Specifically, the computer device can include more or fewer components than shown in the figure, combine some components, or have a different component arrangement.

In some embodiments, a computer device is provided and includes a memory and a processor. The memory stores a computer program, and when the processor executes the computer program, the following steps are implemented:
in a case that an energy storage valve needs to exit operation, gradually reducing a branch current of the energy storage valve; acquiring a power variation of the energy storage valve and sending it to a sending-end voltage source converter valve; and in a case that the branch current satisfies a preset current condition, disconnecting the energy storage valve from a grid.

In some embodiments, a computer-readable storage medium is provided and stores a computer program, and when the computer program is executed by a processor, the following steps are implemented:
in a case that an energy storage valve needs to exit operation, gradually reducing a branch current of the energy storage valve; acquiring a power variation of the energy storage valve and sending it to a sending-end voltage source converter valve; and in a case that the branch current satisfies a preset current condition, disconnecting the energy storage valve from a grid.

In some embodiments, a computer program product is provided, including a computer program. When the computer program is executed by a processor, the following steps are implemented:
in a case that an energy storage valve needs to exit operation, gradually reducing a branch current of the energy storage valve; acquiring a power variation of the energy storage valve and sending it to a sending-end voltage source converter valve; and in a case that the branch current satisfies a preset current condition, disconnecting the energy storage valve from a grid.

Persons of ordinary skill in the art can understand that all or part of the processes of the method in the embodiments may be implemented by a computer program instructing related hardware. The computer program may be stored in a non-volatile computer-readable storage medium, and when the computer program is executed, the processes in the foregoing method embodiments can be included. Any reference to a memory, storage, database, or another medium used and provided in the embodiments of the present application may include at least one of non-volatile and volatile memories. The non-volatile memory can include a read-only memory (Read-Only Memory, ROM), a magnetic tape, a floppy disk, a flash memory, an optical memory, a high density embedded nonvolatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include random access memory (Random Access Memory, RAM), an external cache memory, or the like. As an illustration but not a limitation, the RAM can take various forms, such as static random access memory (Static Random Access Memory, SRAM) or dynamic random access memory (Dynamic Random Access Memory, DRAM). The database used in the embodiments of the present application can include at least one of relational database or non-relational database. The non-relational database can include blockchain-based distributed database, or the like, which is not limited thereto. The processor used in the embodiments of the present application can be a general-purpose processor, a central processing unit, a graphic processing unit, a digital signal processor, programmable logic, quantum computing-based data processing logic, or the like, which is not limited thereto.

The above computer device, storage medium, and computer program product, while reducing the branch current of the energy storage valve, adjust the output power of the sending-end voltage source converter valve in combination with the power variation of the energy storage valve, maintaining stable power in the transmission line, reducing the impact on the VSC valves at two ends when the energy storage valve exits operation, and improving the exit reliability of the energy storage valve. During the insertion process of the energy storage valve, this can allow for real-time acquiring and analysis of the branch voltage of the energy storage valve. In a case that the branch voltage satisfies the preset voltage condition, the energy storage valve is fully connected to the grid bus, reducing the impact on the grid during insertion of the energy storage valve and improving the insertion reliability of the energy storage valve.

Finally, it should be noted that the foregoing embodiments are merely intended to describe the technical solutions of the present application, and are not intended to limit the present application. Although the present application is described in detail with reference to the foregoing embodiments, persons of ordinary skill in the art should understand that modifications can be made to the technical solutions described in the foregoing embodiments, or equivalent substitutions can be made to some technical features or all technical features therein, and these modifications or substitutions do not make the essence of the corresponding technical solutions depart from the scope of the technical solutions of the embodiments of the present application. In particular, as long as there is no structural conflict, the technical features mentioned in the embodiments can be combined in any manner. The present application is not limited to the specific embodiments disclosed but includes all technical solutions falling within the scope of the claims.

## Claims

1. An energy storage valve operation control method, comprising:
gradually reducing a branch current of an energy storage valve in a case that the energy storage valve needs to exit operation;
acquiring a power variation of the energy storage valve and sending it to a sending-end voltage source converter valve, wherein the power variation is used by the sending-end voltage source converter valve to maintain output power; and
disconnecting the energy storage valve from a grid in a case that the branch current satisfies a preset current condition.

2. The energy storage valve operation control method according to claim 1, wherein the gradually reducing a branch current of an energy storage valve in a case that the energy storage valve needs to exit operation comprises:
gradually reducing the branch current of the energy storage valve in a case that the energy storage valve needs to exit operation and the energy storage valve is in a constant current control mode.

3. The energy storage valve operation control method according to claim 1, wherein the gradually reducing a branch current of an energy storage valve in a case that the energy storage valve needs to exit operation comprises:
switching the energy storage valve to a constant current control mode in a case that the energy storage valve needs to exit operation and the energy storage valve is in a constant voltage control mode; and
gradually reducing the branch current of the energy storage valve in a case that the energy storage valve is in the constant current control mode.

4. The energy storage valve operation control method according to any one of claims 1 to 3, wherein the gradually reducing a branch current of an energy storage valve comprises:
setting a target branch current of the energy storage valve to zero and reducing the branch current of the energy storage valve at a preset speed.

5. The energy storage valve operation control method according to any one of claims 1 to 4, wherein the power variation comprises an emitted power amount and an absorbed power amount, and the acquiring a power variation of the energy storage valve comprises:
acquiring a current variation of the energy storage valve; and
determining the emitted power amount of the energy storage valve based on the current variation and a voltage value of the energy storage valve; or
determining the absorbed power amount of the energy storage valve based on the current variation and a voltage value of the energy storage valve.

6. The energy storage valve operation control method according to any one of claims 1 to 5, wherein the disconnecting the energy storage valve from a grid in a case that the branch current satisfies a preset current condition comprises:
controlling a fast switch between the energy storage valve and the grid to turn off in a case that the branch current is less than a preset turn-off impact current; and
controlling an isolating switch between the energy storage valve and the grid to turn off in a case that the fast switch is turned off.

7. The energy storage valve operation control method according to any one of claims 1 to 6, after the disconnecting the energy storage valve from a grid in a case that the branch current satisfies a preset current condition, further comprising:
controlling an energy storage valve submodule to power off in a case that a battery branch current of the energy storage valve submodule in the energy storage valve is less than a preset power-off current.

8. The energy storage valve operation control method according to claim 7, wherein the controlling an energy storage valve submodule to power off comprises:
turning off a charging switch of an energy storage module in the energy storage valve submodule.

9. The energy storage valve operation control method according to claim 7, after the controlling an energy storage valve submodule to power off in a case that a battery branch current of the energy storage valve submodule in the energy storage valve is less than a preset power-off current, further comprising:
controlling the energy storage valve to enter a cold standby state.

10. The energy storage valve operation control method according to any one of claims 1 to 9, wherein the method further comprises:
controlling an energy storage valve submodule of the energy storage valve to power on in a case that the energy storage valve needs to be put into operation;
controlling a first terminal of the energy storage valve to connect to a grid bus in a case that the energy storage valve submodule has completed powering on; and
controlling a second terminal of the energy storage valve to connect to the grid bus in a case that a branch voltage of the energy storage valve satisfies a preset voltage condition.

11. The energy storage valve operation control method according to claim 10, wherein the controlling an energy storage valve submodule of the energy storage valve to power on in a case that the energy storage valve needs to be put into operation comprises:
controlling the energy storage valve submodule of the energy storage valve to power on in a case that the energy storage valve needs to be put into operation and the energy storage valve is in a normal state.

12. The energy storage valve operation control method according to claim 11, wherein a manner of determining that the energy storage valve is in a normal state comprises:
performing a self-check on an energy storage system to which the energy storage valve belongs; and
determining that the energy storage valve is in a normal state in a case that the energy storage system passes the self-check and the energy storage valve is in a locked state.

13. The energy storage valve operation control method according to claim 12, wherein the self-check of the energy storage system comprises at least one of: an energy storage valve control and protection system self-check, a power module self-check, a valve cooling system self-check, a battery management system self-check, a battery status self-check, and a main control box and fire protection self-check.

14. The energy storage valve operation control method according to any one of claims 10 to 13, wherein the controlling an energy storage valve submodule of the energy storage valve to power on in a case that the energy storage valve needs to be put into operation comprises:
checking an operating state of external switches of the energy storage valve in a case that the energy storage valve needs to be put into operation; and
controlling the energy storage valve submodule of the energy storage valve to power on in a case that all external switches of the energy storage valve are in a turn-off state.

15. The energy storage valve operation control method according to claim 14, after the checking an operating state of external switches of the energy storage valve in a case that the energy storage valve needs to be put into operation, further comprising:
starting timing in a case that at least one external switch of the energy storage valve is in a turned-on state;
checking an operating state of the external switches of the energy storage valve when a first preset duration elapses; and
terminating inserting the energy storage valve in a case that the at least one external switch of the energy storage valve is still in the turned-on state.

16. The energy storage valve operation control method according to any one of claims 10 to 15, wherein the controlling an energy storage valve submodule of the energy storage valve to power on comprises:
controlling a valve cooling system to be put into operation;
controlling a precharge resistor insertion switch of the energy storage valve submodule of the energy storage valve to turn on; and
turning off the precharge resistor insertion switch and controlling a precharge resistor bypass switch of the energy storage valve submodule to turn on in a case that the energy storage valve submodule has completed precharging.

17. The energy storage valve operation control method according to claim 16, wherein a manner of determining that the energy storage valve submodule has completed precharging comprises:
acquiring a capacitor voltage of a power module of the energy storage valve submodule; and
determining that the energy storage valve submodule has completed precharging in a case that a difference between a battery voltage of an energy storage module in the energy storage valve submodule and the capacitor voltage is less than a preset voltage threshold.

18. The energy storage valve operation control method according to any one of claims 10 to 17, wherein the controlling a first terminal of the energy storage valve to connect to a grid bus comprises:
controlling a first fast switch and a first isolating switch between the first terminal of the energy storage valve and the grid bus to turn on.

19. The energy storage valve operation control method according to any one of claims 10 to 18, wherein the controlling a second terminal of the energy storage valve to connect to the grid bus in a case that a branch voltage of the energy storage valve satisfies a preset voltage condition comprises:
acquiring a bus voltage measurement value and the branch voltage of the energy storage valve; and
controlling the second terminal of the energy storage valve to connect to the grid bus in a case that the branch voltage is within a preset multiple range of the bus voltage measurement value and remains so for a second preset duration.

20. The energy storage valve operation control method according to claim 19, wherein the acquiring a bus voltage measurement value and the branch voltage of the energy storage valve comprises:
controlling the energy storage valve submodule of the energy storage valve to be put into operation in a constant direct current voltage control mode;
acquiring a first voltage value of the grid bus connected to the first terminal of the energy storage valve, a second voltage value of the grid bus connected to the second terminal of the energy storage valve, and a third voltage value of the second terminal of the energy storage valve;
determining the bus voltage measurement value based on the first voltage value and the second voltage value; and
determining the branch voltage of the energy storage valve based on the first voltage value and the third voltage value.

21. The energy storage valve operation control method according to any one of claims 10 to 20, wherein the controlling a second terminal of the energy storage valve to connect to the grid bus comprises:
controlling a second fast switch and a second isolating switch between the second terminal of the energy storage valve and the grid bus to turn on.

22. An energy storage valve operation control apparatus, comprising:
a branch current control module configured to gradually reduce a branch current of an energy storage valve in a case that the energy storage valve needs to exit operation;
a power variation analysis module configured to acquire a power variation of the energy storage valve and send it to a sending-end voltage source converter valve, wherein the power variation is used by the sending-end voltage source converter valve to maintain output power; and
a disconnection control module configured to disconnect the energy storage valve from a grid in a case that the branch current satisfies a preset current condition.

23. An energy storage system, comprising:
a fast switch;
a sending-end voltage source converter valve, having two ends respectively connected to grid buses;
a receiving-end voltage source converter valve, having two ends respectively connected to the grid buses;
an energy storage valve connected to the fast switch;
an isolating switch connected to the fast switch and the grid buses; and
a control apparatus connected to the sending-end voltage source converter valve, the receiving-end voltage source converter valve, the fast switch, the isolating switch, and the energy storage valve, and configured to execute the energy storage valve operation control method according to any one of claims 1 to 21.

24. The energy storage system according to claim 23, wherein the fast switch comprises a first fast switch and a second fast switch, the isolating switch comprises a first isolating switch and a second isolating switch, the first fast switch is connected to a first terminal of the energy storage valve and the first isolating switch, the first isolating switch is connected to the grid bus, the second fast switch is connected to a second terminal of the energy storage valve and the second isolating switch, the second isolating switch is connected to the grid bus, and the first fast switch, the first isolating switch, the second fast switch, and the second isolating switch are respectively connected to the control apparatus.

25. A computer device, comprising a memory and a processor, wherein the memory stores a computer program, and when the processor executes the computer program, the steps of the energy storage valve operation control method according to any one of claims 1 to 21 are implemented.

26. A computer-readable storage medium, having a computer program stored thereon, wherein when the computer program is executed by a processor, the steps of the energy storage valve operation control method according to any one of claims 1 to 21 are implemented.

27. A computer program product, comprising a computer program, wherein when the computer program is executed by a processor, the steps of the energy storage valve operation control method according to any one of claims 1 to 21 are implemented.
